# EUROPEAN PATENT APPLICATION

(11) **EP 4 745 743 A1**
(43) Date of publication of application: **20.05.2026**
(21) Application number: 24890175.3
(22) Date of filing: 24.07.2024
(51) Int. Cl.: G06F 3/04845

(54) **IMAGE DISPLAY METHOD, AND ELECTRONIC DEVICE**

(30) Priority: 17.11.2023 CN 202311545433
(71) Applicant: Honor Device Co., Ltd., Shenzhen, Guangdong 518040 (CN)
(72) Inventor: HUANG, Bangbang, Shenzhen, Guangdong 518040 (CN)
(74) Representative: Epping - Hermann - Fischer
(86) International application number: PCT/CN2024/107227
(87) International publication number: WO 2025/102810

(57) **Abstract**

This application provides an image display method and an electronic device. The method includes: displaying an image on a display at a first refresh rate when an electronic device is in a first device state, where the electronic device being in the first device state includes: the electronic device receives a target interaction event, the target interaction event includes a click event and a first slide event, and the first slide event is a slide event whose slide speed is greater than a first preset threshold; and the first refresh rate is a maximum refresh rate of the display, or the first refresh rate is greater than or equal to a preset refresh rate threshold. As can be learned, when the electronic device is in the first device state, the electronic device can refresh content on the display at the maximum refresh rate, to keep the electronic device from unnecessarily refreshing the content on the display at the maximum refresh rate, thereby saving system resources.

## Description

This application claims priority to Chinese Patent Application No. 202311545433.0, filed with the China National Intellectual Property Administration on November 17, 2023 and entitled "IMAGE DISPLAY METHOD AND ELECTRONIC DEVICE", which is incorporated herein by reference in its entirety.

### TECHNICAL FIELD

This application relates to the field of terminal devices, and specifically, to an image display method and an electronic device.

### BACKGROUND

A refresh rate (refresh rate) of a display of an electronic device is the quantity of times that the electronic device refreshes content displayed by the display of the electronic device within a unit time, typically in the unit of hertz (Hz). Common refresh rates of the display include 60 Hz, 90 Hz, 120 Hz, and the like. For example, the refresh rate of 60 Hz represents that the content displayed by the display is refreshed 60 times per second. Content displayed a single time may be referred to as one frame of image or one frame of picture. The display can play dynamic content such as a video and an animation effect by keeping refreshing content displayed by the display. Typically, the electronic device may automatically switch a refresh rate based on a requirement of an application, an operation of a user, and a state of the device.

During actual application, the electronic device may make decisions on the refresh rate based on an interaction status between the electronic device and the user. For example, if the display is being touched by the user, that is, if the user is interacting with the electronic device, the electronic device may determine a maximum refresh rate, for example, 120 Hz, as the refresh rate of the display.

However, if the electronic device refreshes the display at the maximum refresh rate during interaction each time, system resources are prone to a waste. For example, when the user clicks the display repeatedly at a low frequency, a very small quantity of animation effects are played on the display, and it is not necessary to perform refreshing at the maximum refresh rate, causing a waste of system resources.

### SUMMARY

Embodiments of this application provide an image display method and an electronic device, to solve the problem of a waste of system resources caused by frequent display of images at a maximum refresh rate in conventional image display methods.

According to a first aspect, an embodiment of this application provides an image display method. The method is applied to an electronic device and includes: displaying an image on a display of the electronic device at a first refresh rate when the electronic device is in a first device state, where the electronic device being in the first device state includes: the electronic device receives a target interaction event, the target interaction event includes a click event and a first slide event, and the first slide event is a slide event whose slide speed is greater than a first preset threshold; and the first refresh rate is a maximum refresh rate of the display, or the first refresh rate is greater than or equal to a preset refresh rate threshold.

In the image display method provided in the embodiments of this application, the electronic device refreshes content on the display at the maximum refresh rate when (only when) receiving the click event and the first slide event. In this way, the quantity of times that the electronic device refreshes the content on the display at the maximum refresh rate can be reduced, to keep the electronic device from unnecessarily performing refreshing at the maximum refresh rate, so that the power consumption of the electronic device can be reduced.

In an implementation, the electronic device being in the first device state further includes: the display is playing a target animation effect, where the target animation effect is a variation range of an animation effect image exceeding a first variation value. When the display plays the target animation effect, the electronic device enters the first device state and refreshes the content on the display at the maximum refresh rate, so that the effect of playing the target animation effect can be improved, the display can be kept from refreshing the content on the display at the maximum refresh rate during playing of any animation effect, and the power consumption of the electronic device can be reduced. Generally, a relatively small variation range of the animation effect is not highly perceptible to a user, and in this case, the image can be refreshed at a relatively low refresh rate. When the variation range of the animation effect is large, the user may perceive a corresponding image variation, and in this case the display effect of the animation effect can be improved by properly increasing the refresh rate, thereby improving user experience. Therefore, this solution can minimize the power consumption of the electronic device without affecting the display of the animation effect.

In an implementation, the target animation effect being the variation range of the animation effect image exceeding the first variation value includes: the target animation effect is a variation range of the animation effect image within first preset duration exceeding the first variation value. The first preset duration and the first variation value define the speed of the variation of the animation effect image. In this way, when the display is playing the animation effect image with a fast variation speed, the image can be displayed at the maximum refresh rate, thereby improving user experience.

Specifically, when the variation range of the animation effect is large within a short time, the user may perceive a corresponding image variation, and in this case the display effect of the animation effect can be improved by properly increasing the refresh rate, thereby improving user experience. A small variation range of the animation effect within a short time is not highly perceptible to the user, and in this case, the image can be refreshed at a relatively low refresh rate. This solution can minimize the power consumption of the electronic device without affecting the display of the animation effect.

In an implementation, the method further includes: The display displays the image using a matching refresh rate of an image layer when the electronic device is not in the first device state. In the embodiments of this application, it can be ensured by using the matching refresh rate of the image layer that the image is smoother and clearer during display, thereby reducing the tearing or blurring of pictures, so that better visual experience can be provided. If the refresh rate is excessively high, the system excessively consumes system resources and electrical energy and brings no additional visual effect. Therefore, the display of the image using the matching refresh rate of the image layer can further avoid unnecessary resource waste and energy consumption.

In an implementation, that the display displays the image using a matching refresh rate of an image layer when the electronic device is not in the first device state includes: The display displays the image at a second refresh rate when the electronic device is not in the first device state and the display includes M first target layers, where the first target layers are active layers, matching frame rates of the first target layers are greater than or equal to a first threshold, the active layers include visible layers in which image content has been updated within first historical duration, and the second refresh rate is determined based on the matching frame rates of the M first target layers. The display displays the image at a third refresh rate when the electronic device is not in the first device state and the display does not include the first target layers, where the third refresh rate is a default refresh rate of the display. When the electronic device is not in the first device state and the display includes the first target layer, the refresh rate for displaying the image by the display is determined based on the matching frame rate of the first target layer, so that the refresh rate can match the first target layer, thereby improving the effect of displaying the first target layer. When the electronic device is not in the first device state and the display does not include the first target layer, the electronic device displays the image at the default refresh rate, so that better visual experience can be provided and excessively high power consumption can be avoided.

In an implementation, the second refresh rate is the largest refresh rate in a refresh rate 1 to a refresh rate M, where the refresh rate 1 is a desired refresh rate of the first first target layer, and the refresh rate M is a desired refresh rate of an M^{th} first target layer; and the refresh rate 1 is determined based on a matching frame rate of the first first target layer and selectable refresh rates supported the display, and the refresh rate M is determined based on a matching frame rate of the M^{th} first target layer and the selectable refresh rates supported by the display.

The desired refresh rate of each first target layer can be calculated in the embodiments of this application, and the largest one in the desired refresh rates of all the first target layers is finally selected. In this way, the refresh effect of each first target layer can reach the optimum, and freezing, tearing, or the like is avoided.

In an implementation, the default refresh rate is a refresh rate when no adjustment is made to the refresh rate for displaying the image by the display. The display refreshes the content at the default refresh rate, so that the power consumption of the electronic device can be reduced, thereby avoiding an unnecessary resource waste.

In an implementation, the default refresh rate may be preset based on the refresh rates supported by the display. Generally, another refresh rate different from the largest and smallest refresh rates supported by the display may be used as the default refresh rate.

In an implementation, the default refresh rate is 60 Hz. The refresh rate of 60 Hz offers broad compatibility in displays, and frame rates of many layers are 60 frames per second. Therefore, the content on the display is refreshed by using 60 Hz as the default refresh rate, so that better user experience can be provided.

For example, the refresh rates supported by the display include 30 Hz, 60 Hz, 90 Hz, and 120 Hz, so that 60 Hz can be set as the default refresh rate.

According to a second aspect, an embodiment of this application provides an image display method, including: determining whether an electronic device is in a first device state before the electronic device refreshes content on a display each time, where the first device state includes: the electronic device receives a target interaction event or the display is playing a target animation effect, the target interaction event includes a click event and/or a first slide event, and the first slide event is a slide event whose slide speed is greater than a first preset threshold; refreshing the content on the display at a first refresh rate when the electronic device is in the first device state, where the first refresh rate is a maximum refresh rate of the display, or the first refresh rate is greater than or equal to a preset refresh rate threshold; determining whether the display includes a first target layer when the electronic device is not in the first device state, where the first target layer is an active layer, a matching frame rate of the first target layer is greater than or equal to a first threshold, and the active layer includes a visible layer in which image content has been updated within first historical duration; determining, when the display includes at least one first target layer, at least one desired refresh rate from at least one selectable refresh rate based on the matching frame rate of each first target layer, and refreshing the content on the display at a maximum refresh rate in the at least one desired refresh rate; and refreshing the content on the display at a third refresh rate when the display does not include the first target layer, where the third refresh rate is a default refresh rate of the display.

In the image display method provided in the embodiments of this application, when receiving the click event and/or the first slide event or the display is playing the target animation effect, the electronic device refreshes the content on the display at the maximum refresh rate. In another case, the electronic device may determine, from a plurality of selectable refresh rates in a scoring manner based on a layer status on the display, a refresh rate to be used by the display to perform refreshing, or refresh the content on the display at the default refresh rate, to keep the electronic device from unnecessarily refreshing the content on the display at the maximum refresh rate, thereby saving system resources.

In an implementation, before the determining whether the display includes a first target layer, the method further includes: determining whether the display includes a second target layer, where the second target layer is an active layer in which an animation effect is being played; and the determining whether the display includes a first target layer includes: determining whether the display includes the first target layer when the display does not include the second target layer. In this way, when the display does not include the second target layer, the refresh rate for displaying the image by the display may be determined based on a scoring procedure.

In an implementation, the determining at least one desired refresh rate from at least one selectable refresh rate based on the matching frame rate of each first target layer includes: for each first target layer, when the matching frame rate is less than or equal to a second threshold, determining the selectable refresh rate less than or equal to the second threshold as a candidate refresh rate, where the second threshold is greater than the first threshold; for each first target layer, when the matching frame rate is greater than the second threshold, determining the selectable refresh rate greater than the second threshold as the candidate refresh rate; scoring each candidate refresh rate based on the matching frame rate; and determining the candidate refresh rate with the highest score as the desired refresh rate of the first target layer. In this way, the desired refresh rate close to the matching frame rate of the layer can be selected, or scoring of all selectable refresh rates based on the matching frame rate can be avoided, so that a computational amount can be reduced, and the refresh rate for displaying the image by the display can be determined as quickly as possible.

In an implementation, the scoring each candidate refresh rate based on the matching frame rate includes: when the candidate refresh rate is equal to the matching frame rate, determining the candidate refresh rate as a first score value; and when the candidate refresh rate is not equal to the matching frame rate, determining the candidate refresh rate as a second score value, where the second score value is less than the first score value; or, when the candidate refresh rate is an integer multiple of the matching frame rate, determining the candidate refresh rate as the first score value; and when the candidate refresh rate is not an integer multiple of the matching frame rate, determining the candidate refresh rate as the second score value. In this way, the desired refresh rate selected through scoring can be as close to the matching frame rate of the layer as possible, thereby improving the effect of displaying the layer.

In an implementation, the method further includes: acquiring a cached result before the electronic device refreshes the content on the display each time, where the cached result includes device status information of the electronic device, layer status information of the active layer, and historical refresh rate information used by the display before the last refresh of the content on the display, and a screen refresh rate is a first historical refresh rate during the last refresh of the content on the display by the electronic device; determining whether a current quantity of the active layers is the same as a quantity of the active layers before the last refresh of the content on the display; when the quantities of the active layers are not the same, determining a quantity of the selectable refresh rates; when the quantities of the active layers are the same, determining whether current layer status information of the active layer is the same as layer status information of the active layer before the last refresh of the content on the display, and determining whether current device status information of the electronic device is the same as device status information of the electronic device before the last refresh of the content on the display; and refreshing the content on the display at the first historical refresh rate when the layer status information of the active layer is the same and the device status information of the electronic device is the same. In this way, the refresh rate is determined based on the cached result, so that the computational amount can be reduced.

In an implementation, the method further includes: when the layer status information of the active layer is different or the device status information of the electronic device is different, determining the quantity of the selectable refresh rates; and when only one selectable refresh rate is included, refreshing the content on the display at the selectable refresh rate. In this way, the computational amount is reduced.

In an implementation, the method further includes: when a plurality of selectable refresh rates are included, determining whether the layers on the display are all in an idle state and the electronic device does not receive a touch event; when the layers on the display are all in an idle state and the electronic device does not receive a touch event, refreshing the content on the display at the minimum refresh rate in the plurality of selectable refresh rates; when at least one layer on the display is in a non-idle state or the display receives a touch event, determining whether the active layer includes only a third target layer, where the third target layer includes a wallpaper layer, a layer whose matching frame rate is less than the first threshold, and/or a status bar layer; when the active layer includes only the third target layer, refreshing the content on the display at the minimum refresh rate in the plurality of selectable refresh rates; and when the active layer includes the third target layer and further includes another layer, determining whether the electronic device is in the first device state. In this way, the refresh rate for displaying the image by the display can be determined based on device status information and status information of the active layer on the display.

In an implementation, the method further includes: when the electronic device receives the target interaction event or the display is in a state of playing the target animation effect, entering the first device state and starting a first timer, where first timing duration is set in the first timer; and when elapsed duration of the first timer exceeds the first timing duration and/or when the electronic device receives a second slide event and/or when the layers on the display are all in an idle state and/or when the target animation effect ends, exiting, by the electronic device, the first device state, where the second slide event is a slide event whose slide speed is less than or equal to the first preset threshold. In this way, it may be determined whether the electronic device is in the first device state.

In an implementation, before the acquiring a cached result, the method further includes: before the electronic device refreshes the content on the display each time, for each active layer, determining whether the active layer includes matching frame rate information, where the matching frame rate information indicates the matching frame rate; and determining the matching frame rate based on an update count of the active layer within second historical duration and a time interval between updates when the active layer does not include the matching frame rate information; and the determining the matching frame rate based on an update count of the active layer within second historical duration and a time interval between updates includes: the matching frame rate is a ratio of the update count to the second historical duration when the update count is greater than or equal to a count threshold or the time intervals between all updates are equal; and when the update count is less than the count threshold and the time intervals between all updates are not equal, the matching frame rate is a first preset value. In this way, the matching frame rate of the first target layer may be obtained based on calculation.

In an implementation, the method further includes: saving the device status information and the layer status information before the electronic device refreshes the content on the display each time and a refresh rate used by the display when the electronic device refreshes the content on the display each time. In this way, a cached result corresponding to a current time of image display may be formed for use to determine a refresh rate of image display a next time.

According to a third aspect, an embodiment of this application provides an electronic device, including: a processor and a memory, where the memory stores program instructions, and the program instructions cause the electronic device to perform the image display method in the foregoing first aspect and any implementation or second aspect and any implementation when executed by the processor.

According to a fourth aspect, an embodiment of this application provides a computer-readable storage medium, where the computer-readable storage medium stores instructions, and when the instructions are executed on an electronic device, the electronic device is enabled to perform the image display method in the foregoing first aspect and any implementation or second aspect and any implementation.

According to a fifth aspect, an embodiment of this application provides a computer program product, where when the computer program product is executed on an electronic device, the electronic device is enabled to perform the image display method in the foregoing first aspect and any implementation or second aspect and any implementation.

It may be understood that the electronic device, the computer-readable storage medium, and the computer program product provided in the foregoing aspects are all applied to the corresponding method provided above. Therefore, for beneficial effects that can be achieved by the electronic device, the computer-readable storage medium, and the computer program product, refer to beneficial effects in the corresponding method provided above. Details are not described herein again.

### BRIEF DESCRIPTION OF DRAWINGS

FIG. 1 is a diagram of composition of layers of an electronic device;
FIG. 2 is a first diagram of a refresh rate decision model of an electronic device;
FIG. 3 is a logical diagram of switching a system status of an electronic device according to an embodiment of this application;
FIG. 4 is a second diagram of a refresh rate decision model of an electronic device;
FIG. 5 is a third diagram of a refresh rate decision model of an electronic device;
FIG. 6 is a diagram of a large weight layer and a small weight layer;
FIG. 7 is a diagram of a plurality of layers participating in decision making;
FIG. 8 is a diagram of a hardware structure of an electronic device 100 according to an embodiment of this application;
FIG. 9 is a block diagram of a software structure of an electronic device 100 according to an embodiment of this application;
FIG. 10 is a first schematic flowchart of an image display method according to an embodiment of this application;
FIG. 11 is a diagram of a target interaction event according to an embodiment of this application;
FIG. 12 is a second schematic flowchart of an image display method according to an embodiment of this application;
FIG. 13 is a first diagram of conditions used for determining a refresh rate for displaying an image in an image display method according to an embodiment of this application;
FIG. 14 is a second diagram of conditions used for determining a refresh rate for displaying an image in an image display method according to an embodiment of this application;
FIG. 15 is a first application diagram of an image display method according to an embodiment of this application;
FIG. 16 is a diagram of a display including no first target layer according to an embodiment of this application;
FIG. 17 is a third diagram of conditions used for determining a refresh rate for displaying an image in an image display method according to an embodiment of this application;
FIG. 18A, FIG. 18B, FIG. 18C, and FIG. 18D are a second application diagram of an image display method according to an embodiment of this application;
FIG. 19 is a third schematic flowchart of an image display method according to an embodiment of this application;
FIG. 20 is a fourth diagram of conditions used for determining a refresh rate for displaying an image in an image display method according to an embodiment of this application;
FIG. 21 is a third application diagram of an image display method according to an embodiment of this application;
FIG. 22 is a fourth application diagram of an image display method according to an embodiment of this application;
FIG. 23 is a fifth diagram of conditions used for determining a refresh rate for displaying an image in an image display method according to an embodiment of this application;
FIG. 24 is a schematic flowchart of comparison with a cached result according to an embodiment of this application;
FIG. 25 is a flowchart of determining a layer type according to an embodiment of this application;
FIG. 26 is an example diagram of the procedure in FIG. 25;
FIG. 27 is a flowchart of scoring selectable refresh rates according to an embodiment of this application;
FIG. 28 is an example diagram of the procedure in FIG. 27;
FIG. 29 is a diagram of switching a device state of an electronic device according to an embodiment of this application; and
FIG. 30 is a diagram of a structure of an image display apparatus according to an embodiment of this application.

### DESCRIPTION OF EMBODIMENTS

The following clearly describes the technical solutions of the embodiments of this application with reference to the accompanying drawings in the embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that in this application, the words such as "example" or "for example" are used to represent giving an example, an illustration, or a description. Any embodiment or design solution described as "example" or "for example" in this application should not be construed as being preferred or advantageous over other embodiments or design solutions. Exactly, use of the term such as "exemplary" or "for example" is intended to present a related concept in a specific manner.

A refresh rate (refresh rate) of a display is the quantity of times that an electronic device refreshes an image displayed by the display within a unit time, typically in the unit of hertz (Hz). Common refresh rates of the display include 60 Hz, 90 Hz, 120 Hz, and the like. For example, the refresh rate of 60 Hz represents that the electronic device may refresh displayed content 60 times per second. Content displayed a single time may be referred to as one frame of image or one frame of picture.

With the continuous refresh of the display, the display can continuously display new image data to display continuous image variations. Generally, when the refresh rate of the display is higher, the display of the image is smoother, and freezing and flickering are reduced. In addition, a high refresh rate can further reduce the generation of an image motion blur (Motion Blur). The image motion blur is the generation of a blurring or trailing effect between consecutive frames in a fast-moving element displayed on the display due to an insufficient refresh rate. The fast-moving element is, for example, a fast-moving game character in a game picture.

Therefore, the visual experience of the display can be enhanced by improving the refresh rate of the display, thereby improving user experience.

However, in electronic devices such as mobile phones, the display does not operate at a maximum refresh rate all the time. The reason is that when the refresh rate of the display is higher, the electronic device consumes more system resources to render and composite images. Therefore, the electronic device may provide a refresh rate automatic adjustment mechanism. In this way, the electronic device can automatically adjust the refresh rate of the display to adjust the level of consumption of resources by the process of displaying images and improve user experience.

A conventional manner of automatic refresh rate switching by an electronic device is exemplarily described below.

A mechanism of automatic refresh rate switching by the electronic device is typically referred to as an adaptive refresh rate (Adaptive Refresh Rate) or an intelligent refresh rate (Intelligent Refresh Rate). Specifically, the refresh rate of the display may be dynamically adjusted based on content currently displayed on the display. For example, when the display of the electronic device displays a static image or is in a short message editing interface, the electronic device can reduce the refresh rate to reduce the power consumption of the battery. When the display of the electronic device is playing a video or a game interface, the electronic device can increase the refresh rate to obtain a smoother picture effect and a faster response speed.

Generally, the display of the mobile phone has a plurality of refresh rate options (for example, 60 Hz, 90 Hz, and 120 Hz), and an operating system performs switching as required. An application also controls the refresh rate, to ensure that image content output by the application can adapt to different refresh rates. The benefit of automatic refresh rate switching is to reduce the power consumption while ensuring a better display effect, thereby extending the battery life.

In mobile phone display technologies, all applications and system interfaces exist in a "layer" form. The electronic device may stack the "layers" based on priorities, transparencies, positions, among other attributes, to eventually form content displayed on the display, hence the "layers". In mobile phone display technologies, each layer may include different images, texts, icons or other visible elements. The layers on the display of the mobile phone can be independently processed and rendered, and are then superimposed to form a final displayed image. Different elements are placed on different layers, so that more efficient, more flexible, and smoother image display can be achieved.

The types and styles of layers and the composition and display processes of layers are described below in detail.

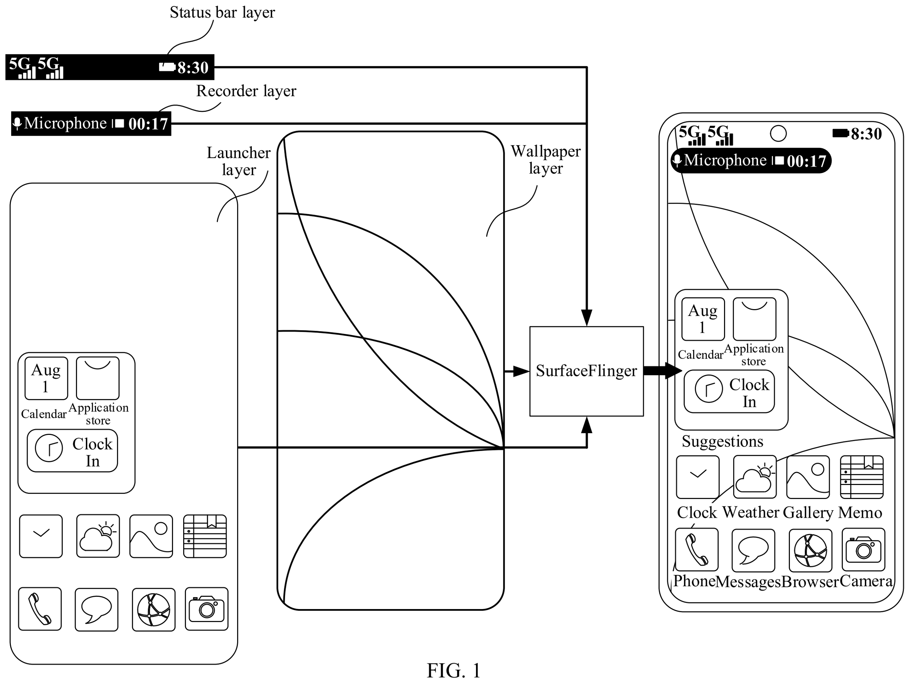

FIG. 1 is a diagram of composition of layers of an electronic device.

As shown in FIG. 1, common mobile phone display layers include the following types.

An application layer (Application Layer) includes main display content, for example, an application interface, an image, and a video, of an application. FIG. 1 exemplarily shows a layer of a recorder application.

A system layer (System Layer) includes system-level elements such as a user interface, a status bar, and a notification bar of an operating system.

A launcher layer (Launcher) is typically the bottommost layer below all other layers. The launcher layer includes application icons, folders, among other elements, and are responsible for processing touch operations or gestures on these elements by a user.

A wallpaper layer (Wallpaper Layer) is responsible for displaying a desktop wallpaper.

The generation to display of a layer on the display generally include the following stages: a creation and drawing stage, a rendering stage, a layer composition stage, a frame buffer storage stage, a display controller processing stage, and a display refresh stage.

The application layer is used as an example to describe the steps from the generation to display of a layer. The display of a graphic on the display of the mobile phone by an application includes the following procedure.

S1. Layer creation and drawing: The application first creates layer data such as graphic objects, texture or a bitmap through a drawing API (for example, OpenGL ES), and then submits the layer data to a surface compositor (SurfaceFlinger).

S2. Graphics processing unit (GPU) rendering: After the application submits the layer data to SurfaceFlinger, SurfaceFlinger delivers the layer data to a GPU for actual graphic rendering. The GPU may process and render these graphic objects using graphics processing functions such as vertex transformation, texture mapping, and lighting calculation of the GPU to generate a final image.

S3. Image composition: After the GPU completes rendering, the generated image is returned to SurfaceFlinger in the form of an image buffer. Continuing to refer to FIG. 1, SurfaceFlinger is responsible for compositing a plurality of layers. A composition process includes operations such as blending of different layers, transparency processing, and image transformation, to generate an image to be finally displayed on the display.

S4. Frame buffer storage stage: After composition is completed, SurfaceFlinger may store final image data in a frame buffer.

S5. Display controller (display controller) processing: A display controller is responsible for reading the image data from the frame buffer and sending the data to the display.

S6. Display refresh: The display may refresh pixel segments in a specific order based on the received image data, thereby displaying the image.

The foregoing process is performed continuously. When needing to refresh a layer, the application resubmits an image to the GPU again to keep real-time update of content on the display.

Generally, the electronic device may determine, based on a refresh rate decision model, a refresh rate (Best Refresh Rate) during each refresh of the display.

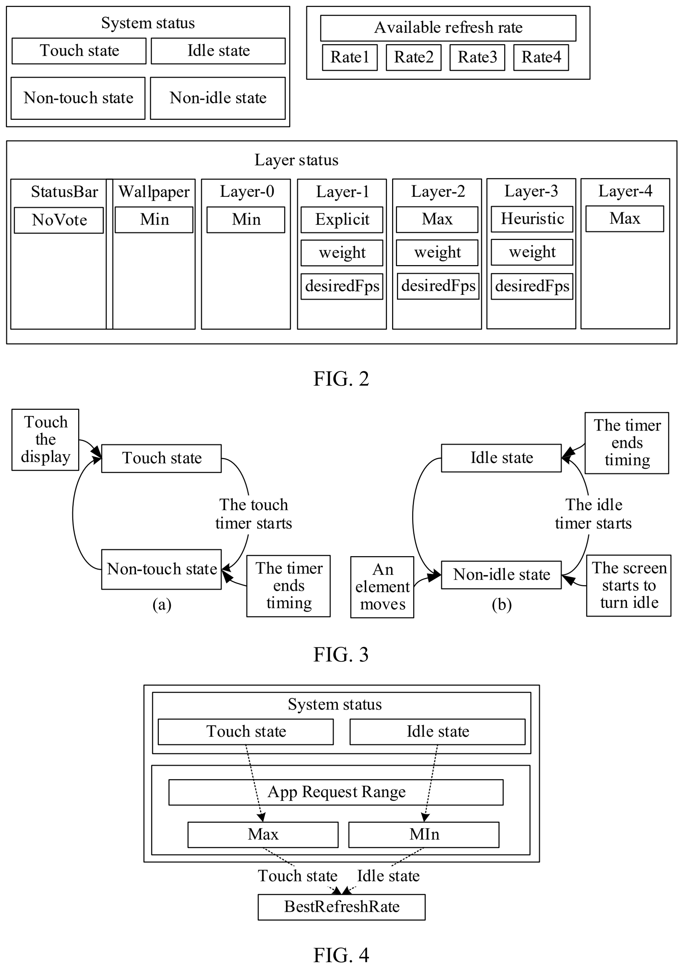

FIG. 2 is a diagram of an architecture of a refresh rate decision model according to an embodiment of this application.

As shown in FIG. 2, in the refresh rate decision model, the refresh rate is mainly determined by three factors: an available refresh rate of the electronic device, a layer status of a layer on the display, and a system status.

The available refresh rate includes one or more refresh rates of the display supported by the electronic device, and is generally determined by factors such as an operating system of the electronic device, performance of the display, and performance of an image processor. For example, the electronic device may support four available refresh rates Rate1, Rate2, Rate3, and Rate4. Rate1, Rate2, Rate3, and Rate4 may be, for example, 30 Hz, 60 Hz, 90 Hz, and 120 Hz, respectively. During actual application, the operating system typically provides some interfaces or APIs, allowing an application to express a desire or requirement for a refresh rate to the system.

Continuing to refer to FIG. 2, the layer status includes a layer type, a layer vote type, a layer weight (weight), and a layer desired frame rate (desiredFps).

An Android operating system is used as an example. The layer may generally include the following types:

Status bar (StatusBar) layer and wallpaper (Wallpaper) layer: The status bar layer and the wallpaper layer are both system layers.

Minimum refresh rate layer (MIN): Layer-0 shown in FIG. 2 includes a layer in which an application with a low image submission frequency, for example, lower than 10 Hz. The image submission frequency is the frequency that the application sends layer data to SurfaceFlinger.

Maximum refresh rate layer (MAX): Layer-2 shown in FIG. 2 includes a corresponding layer when an application is started or a layer involving an animation effect of a large range. The desired frame rate of the largest refresh layer is equal to the maximum refresh rate in the available refresh rates.

Explicit frame rate layer (Explicit): Layer-1 shown in FIG. 2 includes a layer in which an application sets a desired frame rate.

Heuristic layer (Heuristic): Layer-3 shown in FIG. 2 includes a layer for which an image submission frequency can be calculated. An Android system may set a desired frame rate for a layer based on the image submission frequency.

Non-heuristic layer: Layer-4 shown in FIG. 2 includes a layer in which an image submission frequency cannot be calculated.

The layer weight may be a ratio of the size of a layer to the size of the display.

Continuing to refer to FIG. 2, the system status is a status of the electronic device determined based on the operation of the user, including a touch state (Touch State) and a non-touch state (Non-Touch State) as well as an idle state (IDLE State) and a non-idle state (Non-IDLE State).

FIG. 3 is a logical diagram of switching a system status of an electronic device according to an embodiment of this application.

(a) in FIG. 3 shows the logic of switching between the touch state and the non-touch state of the electronic device. For example, when the electronic device is in the non-touch state, the electronic device may enter the touch state when receiving an input event. The input event is, for example, that the user touches the display of the mobile phone, the display of the mobile phone is switched from portrait display to landscape display, or the display is switched from landscape display to portrait display. After the electronic device enters the touch state, a touch timer may be started. If no new input event occurs before the timing of the timer ends, the electronic device enters the non-touch state.

(b) in FIG. 3 shows the logic of switching between the idle state and the non-idle state of the electronic device. For example, when the electronic device is in the idle state, the electronic device may enter the non-idle state when receiving the input event. The input event is, for example, the movement of an element on the display. When the electronic device is in the non-idle state, the electronic device may start an idle timer when the display is idle. The display being idle means that no element is moving on the display. If no element is moving on the display or the user does not touch the display when the timing of the timer ends, the system status is switched from the non-idle state to the idle state.

Based on the refresh rate decision model shown in FIG. 2, the electronic device may first determine whether a maximum refresh rate has been set or a frame rate has been set for a foreground application, that is, whether a layer of a MAX type or an Explicit type exists.

If a layer of the MAX type or the Explicit type exists, the electronic device scores one or more available refresh rates based on a layer status of the layer on the display, and the refresh rate of the display is switched to a refresh rate with the highest score. A specific scoring process is described in detail below. Details are not described herein.

FIG. 4 is a second diagram of a refresh rate decision model of an electronic device.

As shown in FIG. 4, if no layer of the MAX type or the Explicit type exists, the electronic device may decide on a refresh rate based on the system status. Specifically, if the system status is the touch state, the maximum refresh rate, for example, 120 Hz, in the available refresh rates is determined as the refresh rate. If the system status is the idle state, the minimum refresh rate, for example, 30 Hz, in the available refresh rates is determined as the refresh rate.

The electronic device typically enters the touch state when receiving the input event. Therefore, this decision manner is closely related to the interaction between the user and the electronic device. In other words, provided that the electronic device receives the input event, the refresh rate of the display is switched to the maximum refresh rate. However, in some scenarios, the display does not need to operate at the maximum refresh rate. For example, when the user clicks the display repeatedly at a slow speed, the interaction manner generates a very small animation effect and does not need to perform refreshing at the maximum refresh rate. Therefore, this decision manner causes a waste of system resources.

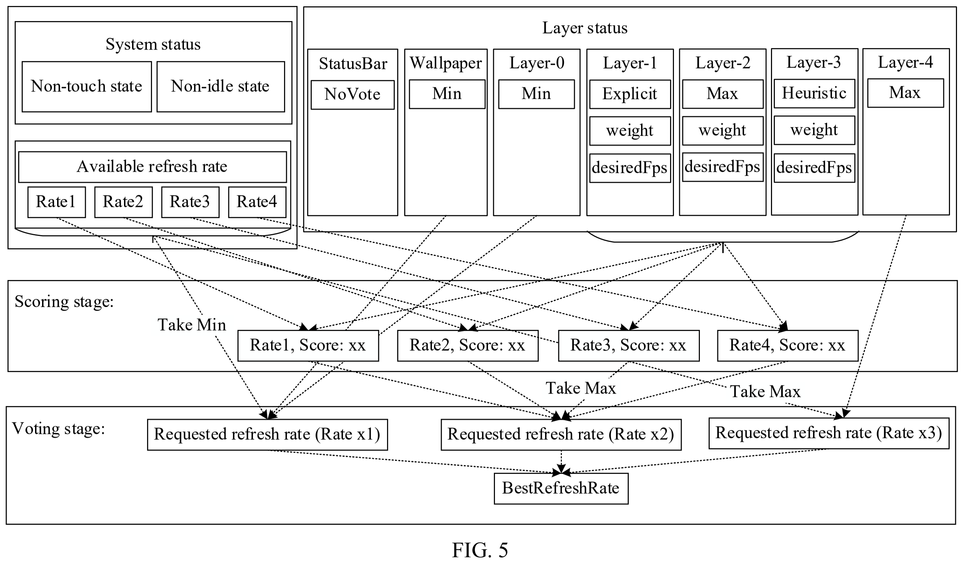

FIG. 5 is a third diagram of a refresh rate decision model of an electronic device.

As shown in FIG. 5, when the electronic device is in both a non-interaction state and the non-idle state, for example, the electronic device is playing a video, the electronic device may perform scoring and voting on one or more available refresh rates based on the layer status, and switch a refresh rate of the display based on a scoring and voting result.

In the scoring stage, each layer participating in scoring on the display of the electronic device scores each available refresh rate. After completing scoring based on all layers participating in scoring, the electronic device sums scores of each available refresh rates to obtain final scores of the available refresh rates, and uses an available refresh rate with the highest score as a requested refresh rate for all the layers participating in scoring. A specific scoring process for a layer is described in detail below. It should be noted that the layers (layer-1, layer-2, and layer-3) with desired frame rates participate in the scoring process, and the non-heuristic layer (layer-4), the minimum refresh rate layer (layer-0), the status bar layer, and the wallpaper layer do not participate in the scoring process.

The voting stage means that the electronic device submits the layers to the voting process with the requested refresh rates of the layers. It may be understood that after the scoring process ends, the electronic device may determine the requested refresh rates of the layers participating in scoring. The requested refresh rate set by the Android system for the minimum refresh rate layer and the wallpaper layer is the minimum refresh rate in the available refresh rates. The requested refresh rate set by the Android system for the non-heuristic layer is the maximum refresh rate in the available refresh rates.

In the voting stage, the electronic device may score the available refresh rates based on the requested refresh rate of each layer on the display. For example, the display includes the minimum refresh rate layer. The requested refresh rate based on the minimum refresh rate layer is the minimum refresh rate in the available refresh rates. Therefore, a score of 1 may be assigned to the minimum refresh rate in the available refresh rates. For another example, the display includes the non-heuristic layer. The requested refresh rate based on the non-heuristic layer is the maximum refresh rate in the available refresh rates. Therefore, a score of 1 may be assigned to the maximum refresh rate in the available refresh rates. Subsequently, the electronic device may refresh the display at the available refresh rates with the highest voting score.

During actual decision, layers participating in voting depend on layers that the display of the electronic device actually includes. For example, the electronic device does not include layers (layer-1, layer-2, and layer-3) participating in scoring and does not include a layer (layer-4) with a non-heuristic frame rate, only the minimum refresh rate layer (layer-0) and the wallpaper layer finally participate in voting.

The scoring stage includes: The electronic device scores the available refresh rates based on the desired frame rates of the layers, with a range of score values being [0, 1]. A score value is determined by a difference between the desired frame rate and an available refresh rate. When the available refresh rate is closer to the desired frame rate, the score is larger. When the available refresh rate is equal to the desired frame rate, the score value of the available refresh rate is 1. Subsequently, a scoring result is multiplied by a layer weight of the layer to obtain one score of the available refresh rate. After the process of scoring all layers participating in scoring by the electronic device ends, the scores of the available refresh rates are summed to obtain final scores of the available refresh rates in the scoring stage.

For the selectable refresh rate 120 Hz:
(1) The electronic device scores 120 Hz based on the desired frame rate of layer-1, the score is x1, and the range of x1 is [0, 1]. The final value of the score for 120 Hz based on layer-1 is x1*weight.
(2) The electronic device scores 120 Hz based on the desired frame rate of layer-2, the score is x2, and the range of x2 is [0, 1]. The final value of the score for 120 Hz based on layer-2 is x2*weight.
(3) The electronic device scores 120 Hz based on the desired frame rate of layer-3, the score is x3, and the range of x3 is [0, 1]. The final value of the score for 120 Hz based on layer-3 is x4*weight.

The final score for 120 Hz in the scoring stage = x1*weight + x2*weight + x4*weight.

Scoring processes of other available refresh rates are the same as the foregoing process. Details are not described herein.

When the electronic device performs scoring based on the desired frame rate of the layer, if the available refresh rates is closer to the desired frame rate, the score is larger. In addition, the final score of the available refresh rate in the scoring stage is intricately tied to the weight of the layer. Therefore, an available refresh rate close to a desired frame rate of a layer with a large weight has a relatively high score, and an available refresh rate close to a desired frame rate of a layer with a small weight has a relatively low score. In this case, the participation of the layer weight in refresh rate decision making tends to cause problems such as freezing.

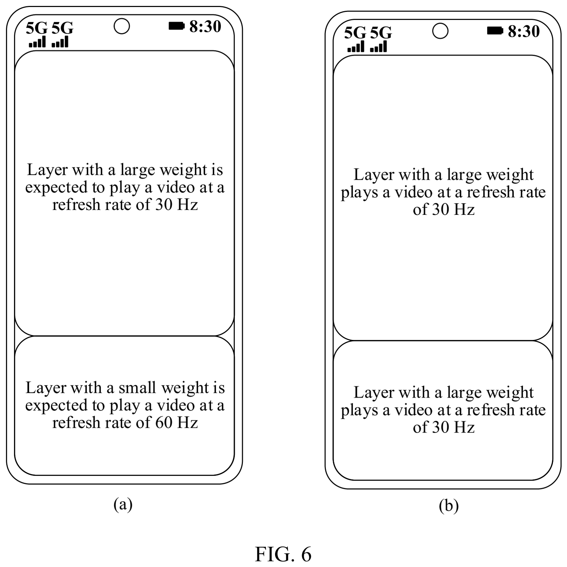

FIG. 6 is a diagram of a large weight layer and a small weight layer.

As shown in (a) in FIG. 6, a desired frame rate for playing a video in a layer with a large weight is 30 Fps. Because the weight of the layer is large, the layer assigns a large score to 30 Hz. As a result, the final score for 30 Hz is slightly high. A desired frame rate desired for playing a video in a layer with a small weight is 60 Fps. Because the weight of the layer is small, the layer assigns a large score to 60 Hz. As a result, the final score for 60 Hz is slightly low. In the foregoing process, the two layers participate in the voting process with 30 Hz as the requested refresh rate, and as a result the decision result is 30 Hz. However, as shown in (b) in FIG. 6, the decision result makes both the large layer and the small layer refreshed at the refresh rate of 30 Hz, and eventually freezing occurs in video playing in the small layer.

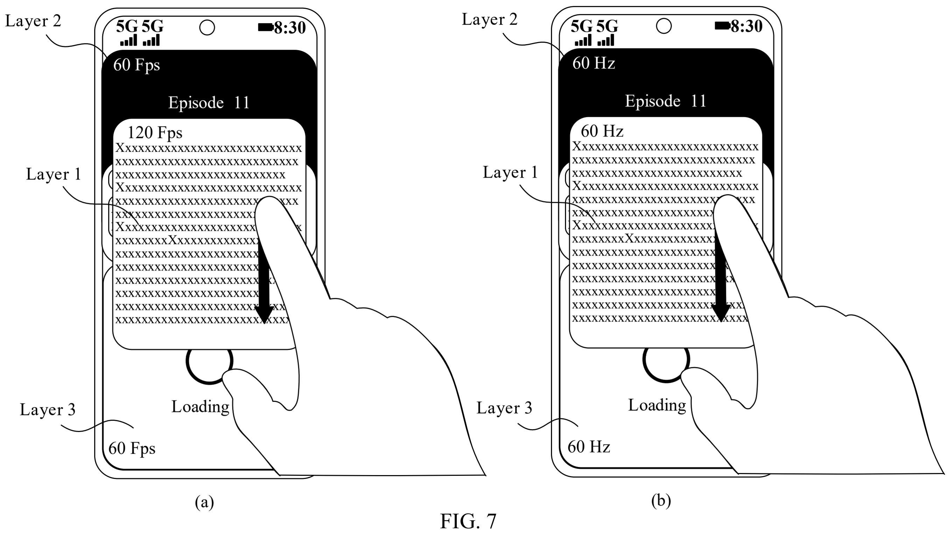

FIG. 7 is a diagram of a plurality of layers participating in decision making.

It should be further noted that when a plurality of layers participate in scoring, each layer participating in scoring participates in the scoring process of the same available refresh rate. In other words, all the layers participate in the process of calculating the requested refresh rate for other layers, and as a result the requested refresh rate of the layer tends to be inaccurate. For an example in which the layers have an equal weight of 0.5, the following scoring scenarios exist.

As shown in (a) in FIG. 7, a desired frame rate of a layer 1 is 120 Fps, a score of 1 * 0.5 = 0.5 is obtained for 120 Hz, and a score of 0 is obtained for other available refresh rates;
a desired frame rate of a layer 2 is 60 Fps, a score of 1 * 0.5 = 0.5 is obtained for 60 Hz, and a score of 0 is obtained for other available refresh rates; and
a desired frame rate of a layer 3 is 60 Fps, a score of 1 * 0.5 = 0.5 is obtained for 60 Hz, and a score of 0 is obtained for other available refresh rates.

In this way, in total scores obtained in the scoring stage, 60 Hz (a score of 1) > 120 Hz (a score of 0.5) > other available refresh rates. In this way, the requested refresh rate obtained for the layers participating in scoring is 60 Hz. As shown in (b) in FIG. 7, after voting of the layers with the requested refresh rate of the layers, the eventually obtained decision result is 60 Hz, resulting in suboptimal experience of the animation effect of the layer 1. As can be seen, the layers all participate in the processes of calculating the requested refresh rates of other layers, eventually causing suboptimal experience of the animation effect.

In addition, the electronic device typically sets the requested refresh rates of layers with no explicit frame rate and an image submission frequency that cannot be calculated to the maximum refresh rate. In this case, if these layers also participate in voting, the maximum refresh rate may obtain the most votes, and the electronic device switches the refresh rate of the display to the maximum refresh rate. However, the layers with no explicit frame rate and an image submission frequency that cannot be calculated are typically some layers that appear suddenly and include irregular animation effects on the display. When these layers appear, if the refresh rate of the display is switched to the maximum refresh rate, a waste of system resources is caused.

To solve the foregoing problems, embodiments of this application provide an image display method. The method may be applied to an electronic device. The solution can avoid a waste of resources in the process of refresh rate switching of a display, and can also avoid a suboptimal refreshing effect of a layer, so that user experience can be improved.

The image display method provided in embodiments of this application may be applied to an electronic device having a display function. The electronic device includes, but is not limited to, a mobile phone, a tablet computer, a personal computer, a workstation device, a large-screen device (for example, a smart screen or a smart television), a wearable device (for example, a smart band or a smartwatch), a handheld game console, a home game console, a virtual reality device, an augmented reality device, a hybrid reality device, an in-vehicle intelligent terminal, and the like.

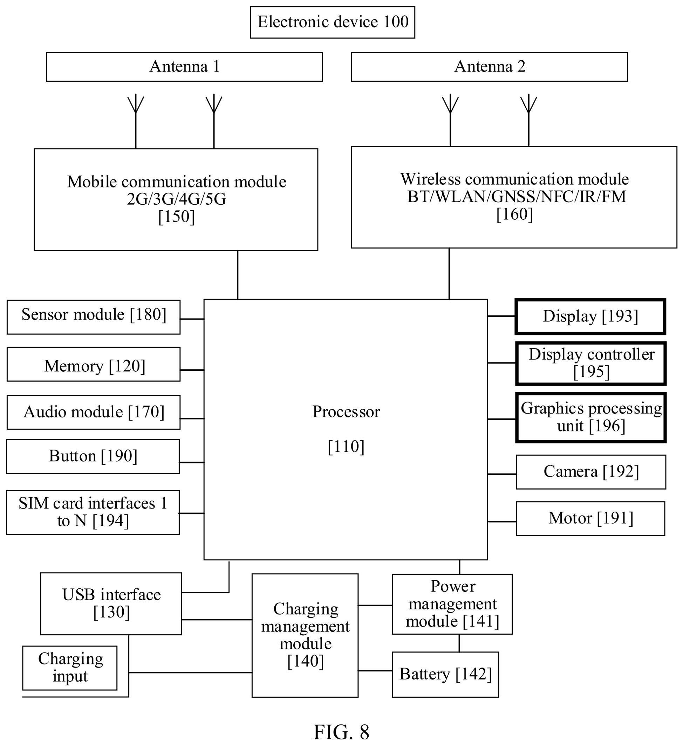

FIG. 8 is a schematic diagram of a hardware structure of an electronic device according to an embodiment of this application.

As shown in FIG. 8, the electronic device 100 may include a processor 110, a memory 120, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, a camera 192, a display 193, a subscriber identity module (subscriber identification module, SIM) card interface 194, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor (modem), a display controller (display controller) 195, a graphics processing unit (graphics processing unit, GPU) 196, an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

The graphics processing unit 196 may be configured to perform image rendering, video encoding and decoding, and the like. The display controller 195 may be configured to receive image data from the graphics processing unit 196, and convert the image data into signals that can drive the display of the display 193.

The memory 120 can be configured to store computer-executable program code. The executable program code includes instructions. The memory 120 may include a program storage area and a data storage area. The program storage area may store an operating system, an application required by at least one function (for example, a sound playback function or an image playback function), and the like. The data storage area may store data (for example, audio data, an address book, or the like) created during use of the electronic device 100, and the like. In addition, the memory 120 may include a high-speed random access memory, and may further include a nonvolatile memory, for example, at least one magnetic disk storage device, a flash memory device, or a universal flash storage (universal flash storage, UFS). The processor 110 performs various function applications and data processing of the electronic device 100 by running the instructions stored in the memory 120 and/or instructions stored in a memory disposed in the processor.

The USB interface 130 is an interface that conforms to the USB standard specification, and may be specifically a Mini USB interface, a Micro USB interface, a USB Type C interface, or the like. The USB interface 130 may be configured to connect to the charger to charge the electronic device 100, or may be configured to transmit data between the electronic device 100 and a peripheral device, or may be configured to connect to a headset for playing an audio through the headset. The interface may be configured to connect to another electronic device like an AR device.

It can be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from an interface connection manner in this embodiment, or use a combination of a plurality of interface connection manners.

The charging management module 140 is configured to receive a charging input from the charger. The charger may be a wireless charger or a wired charger. In some embodiments in which wired charging is used, the charging management module 140 may receive a charging input from the wired charger through the USB interface 130. In some embodiments in which wireless charging is used, the charging management module 140 may receive a wireless charging input through a wireless charging coil of the electronic device 100. The charging management module 140 may further supply power to the electronic device through the power management module 141 when the battery 142 is charged.

The power management module 141 is configured to connect to the battery 142, the charging management module 140, and the processor 110. The power management module 141 receives an input of the battery 142 and/or an input of the charging management module 140, and supplies power to the processor 110, the memory 120, a display 193, a camera 192, the wireless communication module 160, and the like. The power management module 141 may be further configured to monitor parameters such as a battery capacity, a quantity of battery cycles, and a battery health state (power leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover a single communication frequency band or a plurality of communication frequency bands. Different antennas may be multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal by an audio device (which is not limited to the speaker 170A, the receiver 170B, or the like), or displays an image or a video on the display 193. In some embodiments, the modem processor may be an independent device. In some other embodiments, the modem processor may be independent of the processor 110 and may be disposed in a same device as the mobile communication module 150 or another functional module.

The wireless communication module 160 may provide a solution to wireless communication applied to the electronic device 100 and including wireless local area networks (WLAN) (such as wireless fidelity (Wi-Fi)), Bluetooth (BT), a global navigation satellite system (GNSS), frequency modulation (FM), near field communication (NFC), and an infrared (IR) technology. The wireless communication module 160 may be one or more devices integrating at least one communication processing module. The wireless communication module 160 receives an electromagnetic wave through the antenna 2, conducts frequency modulation and filtering on an electromagnetic wave signal, and transmits the processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device through a wireless communications technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

A software system of the electronic device 100 may use a layered architecture, an event-driven architecture, a microkernel architecture, a microservice architecture, or a cloud architecture. In this embodiment of this application, an Android system with a layered architecture is used as an example to describe a software structure of the electronic device 100.

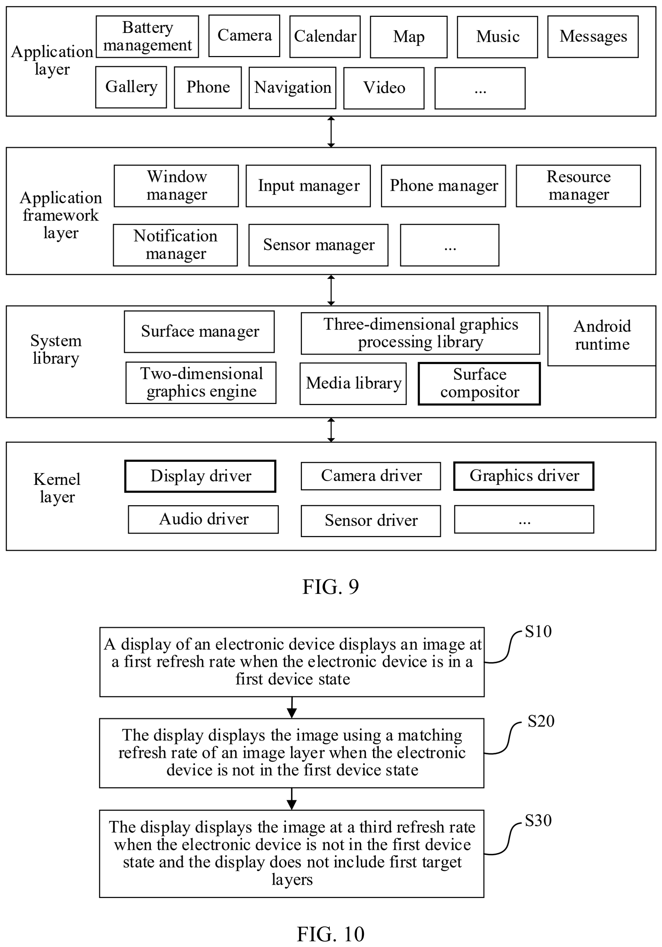

FIG. 9 is a structural block diagram of software of an electronic device according to an embodiment of this application.

In the layered architecture, software is divided into several layers, and each layer has a clear role and task. The layers communicate with each other through a software interface. In some embodiments, an Android system is divided into four layers from top to bottom: an application layer; an application framework layer; an Android runtime (Android runtime) and a system library; and a kernel layer.

The application layer may include a series of application packages.

As shown in FIG. 9, the application packages may include applications such as battery management, camera, gallery, calendar, phone, map, navigation, music, video, and messages.

The application framework layer provides an application interface (application programming interface, API) and a programming framework for applications at the application layer. The application framework layer includes some predefined functions.

As shown in FIG. 5, the application framework layer may include a window manager, an input manager InputManager, a sensor manager SensorManager, a phone manager, a resource manager, a notification manager, and the like.

The input manager may be configured to monitor an input event of a user, for example, a click event or a slide event performed by a finger of the user on the display 193 of the electronic device 100. By monitoring the input event, the electronic device 100 may determine whether the electronic device is being used.

The sensor manager is configured to monitor data returned by each sensor in the electronic device, for example, motion sensor data, optical proximity sensor data, and temperature sensor data. The electronic device may determine, through the data returned by each sensor, whether jitter occurs, whether the display 193 is occluded, or the like.

Android Runtime includes a kernel library and a virtual machine. The Android runtime is responsible for scheduling and managing the Android system.

The core library includes two parts. One of the parts is a performance function that needs to be invoked in the Java language, and the other part is a core library of Android.

The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provides fusion of 2D and 3D layers for a plurality of applications.

The media library supports playback and recording in a plurality of commonly used audio and video formats, static image files, and the like. The media library may support a plurality of audio and video encoding formats, such as MPEG-4, H.264, MP3, AAC, AMR, JPG, and PNG.

The three-dimensional graphics processing library is configured to implement three-dimensional graphics drawing, image rendering, composition, layer processing, etc.

The 2D graphics engine is a drawing engine for 2D drawing.

Further, the system library further includes a surface compositor (SurfaceFlinger). SurfaceFlinger is configured to manage and composite a graphical interface of an application. For example, the application may provide layer data to SurfaceFlinger. SurfaceFlinger receives the layer data from the application, and may deliver the layer data to the GPU 196, to enable the GPU 196 to perform image rendering. Subsequently, SurfaceFlinger may composite a rendered image to obtain a plurality of layers. After composition of the layers is completed, SurfaceFlinger may send an image to a frame buffer.

The kernel layer is a layer between hardware and software. The kernel layer includes at least a display driver (Display Driver), a camera driver, an audio driver, a sensor driver, and a graphics driver (Graphics Driver).

The display driver may be responsible for processing image data from the graphics processor 196 in the frame buffer, and converting the image data into signals recognizable by the display 193, to ensure that correct images can be sent to the display 193 and displayed properly. The graphics driver may be configured to manage and control a graphics processing unit 196 in a computer system, and a graphics function and a display device related to the graphics processing unit.

It may be understood that the structure shown in this embodiment of this application does not constitute a specific limitation on the electronic device 100. In some other embodiments of this application, the electronic device may include more or fewer components than those shown in the figure, or combine some components, or split some components, or have different component arrangements. The components in the figure may be implemented by hardware, software, or a combination of software and hardware.

FIG. 10 is a first schematic flowchart of an image display method according to an embodiment of this application.

As shown in FIG. 10, the image display method provided in the embodiments of this application may include S10: displaying an image on a display of the electronic device at a first refresh rate when the electronic device is in a first device state, where the electronic device being in the first device state includes: the electronic device receives a target interaction event, the target interaction event includes a click event and a first slide event, and the first slide event is a slide event whose slide speed is greater than a first preset threshold; and the first refresh rate is a maximum refresh rate of the display, or the first refresh rate is greater than or equal to a preset refresh rate threshold.

In the embodiments of this application, whether the display refreshes the image at the first refresh rate may be determined based on a device state of the electronic device. The device state may be specifically the first device state, or referred to as a Boost state. A condition for the electronic device to enter the first device state may be the occurrence of a specific event. The specific event may be specifically triggered by various operations on the display by a user captured by a touch sensor of the electronic device.

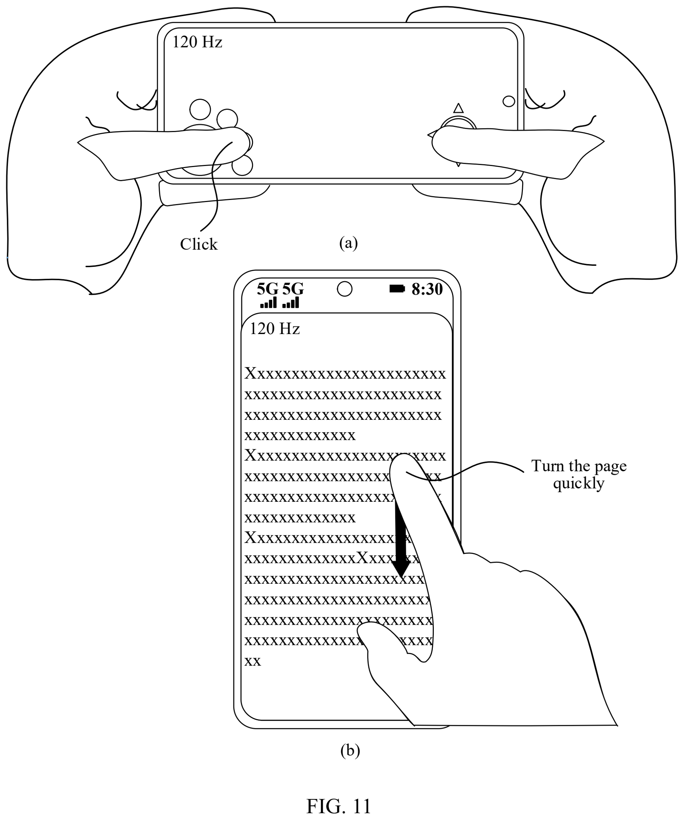

Specifically, the click event is triggered by a click operation. However, the click event may not be triggered by any touch action on the display by the user. The click event may be triggered by an action with an interval between a press action and a release action of the user being less than a specific time threshold. For example, as shown in (a) in FIG. 11, the user quickly presses and releases a game interface with a finger, and in this case, the click event occurs. The time threshold is, for example, 300 ms. This is not specifically limited in the embodiments of this application.

The first slide event may be triggered by an operation of quickly sliding a finger on the display by the user. For example, the user quickly browses a long page or quickly scrolls a list. The first slide event is a slide event whose slide speed is greater than the first preset threshold. During actual application, the slide speed may be determined based on a slide pixel count and time of a slide operation. Specifically, the electronic device may record positions touched by a finger at fixed time intervals, calculate a position of the finger on the display after m time intervals based on information of these positions to obtain a pixel difference between the first position and an m^{th} position, and subsequently calculate the slide speed based on the pixel difference and corresponding total duration between the two positions. The time interval is, for example, 1 ms, and m may be, for example, equal to 5. This is not specifically limited in the embodiments of this application. Subsequently, whether the slide event is the first slide event may be calculated based on the slide speed. For example, as shown in (b) in FIG. 11, the user quickly turns a page, and in this case, the first slide event may occur.

The first preset threshold may be, for example, 1000 pixels/second or 500 pixels/second, and may be specifically determined according to an actual case. This is not specifically limited in the embodiments of this application.

The first refresh rate may be determined based on all refresh rates supported by the display. For example, the display supports any refresh rate of 30 Hz, 60 Hz, 120 Hz, and 144 Hz. In this case, the electronic device may determine the first refresh rate as the maximum refresh rate of 144 Hz supported by the display in this case.

In the embodiments of this application, the first refresh rate may be determined based on the selectable refresh rates supported by the display. The first refresh rate is one of the selectable refresh rates. The selectable refresh rates supported by the display may be jointly determined by an operating state of the electronic device and a hardware capability of the display. For example, the hardware capability of the display supports 144 Hz or a higher refresh rate. However, the electronic device locks a refresh rate range based on the factors such as the operating state of the electronic device, to enable the display to perform refreshing at the maximum refresh rate of 120 Hz. In this case, the selectable refresh rates during refresh of the display are less than or equal to 120 Hz. In this case, the first refresh rate may be 120 Hz. (a) and (b) in FIG. 11 exemplarily show that the first refresh rate is equal to 120 Hz.

In the embodiments of this application, the refresh rate threshold may be 60 Hz or 90 Hz. This is not specifically limited in the embodiments of this application.

It may be understood that when the user uses the electronic device, many events may be triggered along with the interaction. In addition to the click event and the first slide event, the events further include, for example, a long press event, and a screen orientation change event. Because the first device state may not be triggered by all events, in this case, when another event different from the click event and the first slide event occurs, the electronic device does not enter the first device state. In this case, the display can be kept from displaying an image at the first refresh rate. Therefore, based on the method provided in the embodiments of this application, the quantity of times that the electronic device refreshes the content on the display at the maximum refresh rate can be reduced, to keep the electronic device from unnecessarily performing refreshing at the maximum refresh rate, so that the power consumption of the electronic device can be reduced.

In the embodiments of this application, the electronic device being in the first device state may further include: the display is playing a target animation effect, where the target animation effect may be a variation range of an animation effect image exceeding a first variation value. The variation range may be a variation level or extent of an attribute or a feature of the image, for example, a size variation range, a position variation range, a color variation range, or a transparency variation range of an element in the image. For example, if a button in the image is enlarged, in this case, a size variation range of the button is a difference value between a size after enlargement and an initial size. In this case, the first variation value is a size threshold. For another example, a button in the image is located at a lower left corner of the display in an initial state, and the button is located at a central position of the display after a specific period of time. In this case, a position variation range is a distance covered by a movement path of the button from the lower left corner to the central position. In this case, the first variation value is a distance threshold. The position variation range may be measured in different dimensions, for example, a transverse movement in a horizontal direction and a longitudinal movement in a vertical orientation.

In the embodiments of this application, the target animation effect may be specifically a splash animation effect or a transition animation effect. The splash animation effect may be an animation effect in a starting process before an application enters a user interface, and the transition animation effect may be an animation effect that appears during switching between interfaces or switching between applications of the electronic device. For example, the transition animation effect is a transition animation effect that appears during switching to the home screen of the electronic device, closing of the application, among other operations.

As can be seen, in the embodiments of this application, the electronic device may enter the first device state when the target animation effect occurs, and when the electronic device is in the first device state, the display displays an image at the first refresh rate. The quantity of times that the electronic device refreshes the content on the display at the maximum refresh rate can be reduced, to keep the electronic device from unnecessarily performing refreshing at the maximum refresh rate, so that the power consumption of the electronic device can be reduced.

Further, the target animation effect being the variation range of the animation effect image exceeding the first variation value may include: the target animation effect is a variation range of the animation effect image within first preset duration exceeding the first variation value. The first preset duration may be, for example, equal to 100 ms, 200 ms, 300 ms, or 500 ms. The first variation value may be, for example, 300 pixels or 500 pixels. This is not specifically limited in the embodiments of this application.

Continuing to refer to FIG. 10, the image display method provided in the embodiments of this application may further include S20: The display displays the image using a matching refresh rate of an image layer when the electronic device is not in the first device state.

In the embodiments of this application, the image layer is a layer used for displaying an image on the display. It can be ensured by using the matching refresh rate of the image layer that the image is smoother and clearer during display, thereby reducing the tearing or blurring of pictures, so that better visual experience can be provided. If the refresh rate is excessively high, the system excessively consumes system resources and electrical energy and brings no additional visual effect. Therefore, the display of the image using the matching refresh rate of the image layer can further avoid unnecessary resource waste and energy consumption.

Further, step S20 may include S21: The display displays the image at a second refresh rate when the electronic device is not in the first device state and the display includes M first target layers, where the matching frame rates and the first target layers are active layers, matching frame rates of the first target layers are greater than or equal to a first threshold, the active layers include visible layers in which image content has been updated within first historical duration, and the second refresh rate is determined based on the matching frame rates of the M first target layers; and

The matching frame rate may represent the speed of updating and rendering the first target layer within every second. The second refresh rate is determined based on the matching frame rate of the first target layer, so that the refresh rate of the display can match the speed of updating and rendering the first target layer, so that problems such as tearing in image content in the first target layer can be avoided.

In some implementations, the first historical duration may be equal to 1.2 s. This is not specifically limited in the embodiments of this application.

It may be understood that the value of M is determined based on an actual case of layers on the display.

Specific steps of determining the second refresh rate based on the matching frame rates of the M first target layers are described below.

Specifically, the second refresh rate is the maximum refresh rate in a refresh rate 1 to a refresh rate M, where the refresh rate 1 is a desired refresh rate of the first first target layer, and the refresh rate M is a desired refresh rate of an M^{th} first target layer; and the refresh rate 1 is determined based on a matching frame rate of the first first target layer and selectable refresh rates supported the display, and the refresh rate M is determined based on a matching frame rate of the M^{th} first target layer and the selectable refresh rates supported by the display.

The step of calculating and determining the desired refresh rate based on the matching frame rate and the selectable refresh rates supported by the display may be calculating the proximity between the matching frame rate and the selectable refresh rates, and determining a selectable refresh rate with the closest matching frame rate as the desired refresh rate of the first target layer. A method for calculating proximity is, for example, calculating multiple relationships between the matching frame rate and the selectable refresh rates, and determining a selectable refresh rate closest to the matching frame rate based on the multiple relationships. The method for calculating proximity may alternatively be calculating percentage differences between the matching frame rate and the selectable refresh rates. Specifically, a difference value between the matching frame rate and a selectable refresh rate may be calculated, and the difference value is divided by the matching frame rate to obtain a quotient, and the quotient is subsequently multiplied by 100 to obtain a percentage value. This is not specifically limited in the embodiments of this application.

For each first target layer, one or more selectable refresh rates may be determined after calculation. For example, a matching frame rate of an i^{th} first target layer is 30 Fps, and in this case, desired refresh rates of the i^{th} first target layer may be 30 Hz and 60 Hz.

For example, the selectable refresh rates may include 30 Hz, 60 Hz, 90 Hz, and 120 Hz. The display may include three first target layers. A matching frame rate of the first first target layer may be 30 Fps, and it is determined through calculation that desired refresh rates of the first first target layer are 30 Hz and 60 Hz. A matching frame rate of the second first target layer may be 120 Fps, and it is determined through calculation that a desired refresh rate of the first first target layer is 120 Hz. A matching frame rate of the third first target layer may be 60 Fps, and it is determined through calculation that a desired refresh rate of the first first target layer is 120 Hz. In this case, the second desired refresh rate is the largest refresh rate in 30 Hz, 60 Hz, and 120 Hz, that is, the second desired refresh rate is 120 Hz.

The method provided in the embodiments of this application may further include step S30: The display displays the image at a third refresh rate when the electronic device is not in the first device state and the display does not include the first target layers, where the third refresh rate is a default refresh rate of the display.

The default refresh rate is a refresh rate when no adjustment is made to the refresh rate for displaying the image by the display. The display refreshes the content at the default refresh rate, so that the power consumption of the electronic device can be reduced, thereby avoiding an unnecessary resource waste.

In the embodiments of this application, the default refresh rate may be 60 Hz. The refresh rate of 60 Hz offers broad compatibility in displays, and frame rates of many layers are 60 frames per second. Therefore, the content on the display is refreshed by using 60 Hz as the default refresh rate, so that better user experience can be provided. The default refresh rate may alternatively be determined based on factors in various aspects such as the hardware capability of the display. For example, when the highest refresh rate supported by the display is 144 Hz, in this case, the default refresh rate may be 90 Hz. This is not specifically limited in the embodiments of this application.

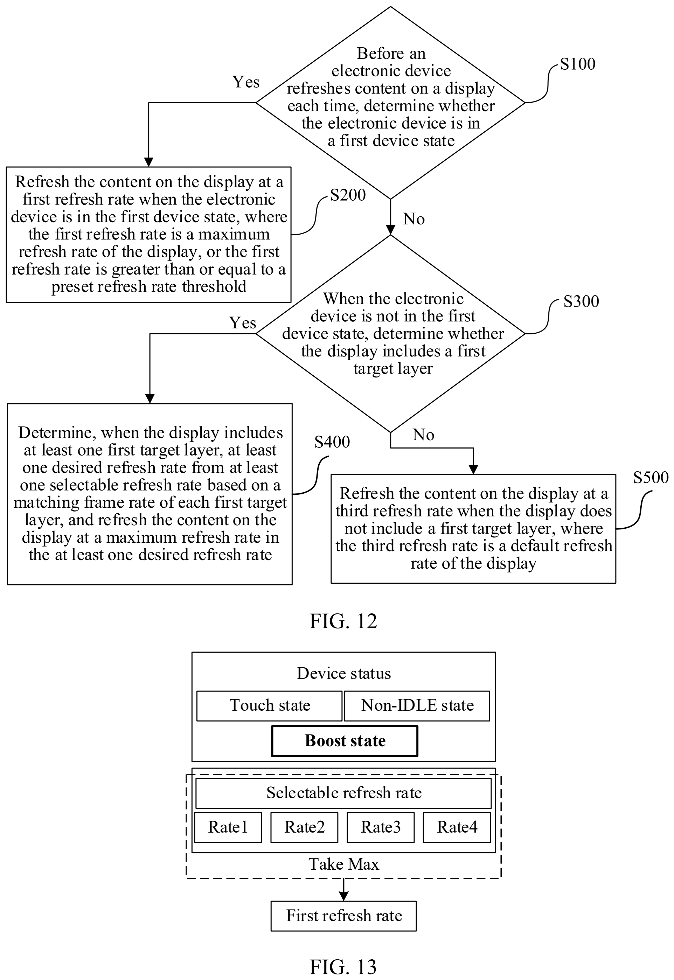

FIG. 12 is a second schematic flowchart of an image display method according to an embodiment of this application.

As shown in FIG. 12, the image display method provided in the embodiments of this application includes the following steps S100 to S500.

S100: Before an electronic device refreshes content on a display each time, determine whether the electronic device is in a first device state.

In the embodiments of this application, the timing for refreshing the content on the display by the electronic device each time may be controlled by a vertical synchronization signal (VSync). The vertical synchronization signal may include a VSync-HW signal generated by hardware and a VSync-APP signal and a VSync-SF signal simulated by software. The VSync-HW signal, the VSync-APP signal, and the VSync-SF signal typically periodically arrive at specific time intervals.

An electronic device running an Android system is used as an example. When the VSync-APP signal arrives, a SurfaceFlinger process draws, based on layer data sent by a foreground application, one or more layers required for an image frame, and performs layer rendering on one or more drawn layers. Next, when the VSync-SF signal arrives, the SurfaceFlinger process composites one or more layers with rendering completed into an image frame, and sends the composited image frame to the display. Next, when the VSync-HW signal arrives, the display performs refreshing to display the image frame. Therefore, "before an electronic device refreshes content on a display each time" may mean "before the electronic device receives the VSync-HW signal".

The first device state may include: the electronic device receives a target interaction event or the display is playing a target animation effect. The target interaction event includes a click event and/or a first slide event.

In the embodiments of this application, the target interaction event may include a click event (Click) and/or a first slide event.

Before the target interaction event is described, the touch (touch) event involved in the electronic device is briefly described first. In the electronic device, the touch on the display is typically used as a main manner of input and user interaction. When a user gently touches or clicks the display, corresponding touch events are triggered. These events may include:
1. Touch down (Touch Down) event: The event represents that the user starts to press a finger on the display. In this event, the electronic device typically records a position and a timestamp of the pressing by the user.
2. Touch move (Touch Move) event: The event represents that the user slides the finger on the display. In this event, the electronic device typically records position information, a movement distance, a timestamp, and the like of the current sliding finger.
3. Touch up (Touch Up) event: The event represents that the user releases the finger from the display. In this event, the electronic device typically records a position and a timestamp of releasing the finger.
4. Click event: The Click event is triggered by a click operation. A series of events that continuously occur between the Touch Down event and the Touch Up event are considered as one click event. Specifically, when a difference between the timestamps of the Touch Down event and the Touch Up event on the display is less than specific duration (for example, 300 ms), one Click event is triggered. As can be seen, the Click event occurs depending on the Touch Down event, and the occurrence of the Touch Down event does not necessarily trigger the Click event. The Click event is triggered only when the difference between the timestamps of the Touch Down event and the Touch Up event is less than the specific duration.

It should be additionally noted that the first device state may not be triggered by any Click event. It may be set to forbid triggering of the first device state for a specific application in the embodiments of this application. For example, for a Click event on a layer of an input method application, the first device state cannot be triggered.

The first slide event may be a slide event whose slide speed is greater than the first preset threshold. The first slide event may be triggered depending on the Touch Move event. Specifically, the electronic device may calculate the slide speed based on the position information, the movement distance, the timestamp, and the like of the sliding finger. When the slide speed is greater than the first preset threshold, the first slide event may be triggered. It may be understood that when the first slide event occurs, the content on the display quickly scrolls as the finger of the user slides. Therefore, the content on the display has a large variation.

The target animation effect may be an animation effect involving a relatively broad variation range or a quick variation. Specifically, the target animation effect may be that a variation range of the animation effect image exceeds the first variation value. For example, the target animation effect is a splash animation effect of an application, an animation effect in a game, or the like, and may be specifically a fade and transition effect, a pan and zoom animation, a drag and scroll effect, and the like. A small movement of a tiny icon, a slight swing of a graphic element, and the like are all non-target animation effects. A specific type of the target animation effect may be determined according to an actual requirement. This is not specifically limited in the embodiments of this application.

S200: When the electronic device is in the first device state, refresh the content on the display at a first refresh rate.

The first refresh rate is the maximum refresh rate of the display. Alternatively, the first refresh rate is greater than or equal to a preset refresh rate threshold.

Step S200 is a condition for determining a refresh rate for displaying an image provided in the embodiments of this application. Based on step S200, the refresh rate for displaying the image by the display may be determined.

FIG. 13 is a first diagram of conditions used for determining a refresh rate for displaying an image in an image display method according to an embodiment of this application.

As shown in FIG. 13, the electronic device may refresh the content on the display at the first refresh rate when the electronic device is in the first device state.

As can be seen, in the image display method provided in the embodiments of this application, instead of performing refreshing at the maximum refresh rate based on the occurrence of any interaction event, the display is switched to the maximum refresh rate only when the click event and/or the first slide event occurs. In this way, some relatively simple interaction events or animation effects do not trigger the maximum refresh rate, so that the problem of a waste of resource caused by frequent refreshing at the maximum refresh rate can be solved.

For example, when the user reads text on the display, the Touch Down event, the Touch Move event, and the Touch Up event are typically triggered. The Touch Down event corresponds to that the user presses a finger. The Touch Move event corresponds to that the user slowly slides a page to make the page display new text content. The Touch Up event corresponds to that the user completes turning the page and releases the finger. As can be seen, in this process, the involved variation on the display is very small, and the maximum refresh rate does not need to be used. Based on the embodiments of this application, the foregoing process does not trigger the target interaction event, and does not trigger the maximum refresh rate.

The maximum refresh rate supported by the display of the electronic device is related to various factors such as a hardware capability of the electronic device and a display technology. The hardware capability of the electronic device includes the performance of devices such as a processor, a graphics processing unit, internal memory, and a memory. The performance of these hardware components determines the calculation and graphics processing capability of the electronic device. A high hardware capability can support a higher refresh rate and a smoother display effect. The display technology is a technology of manufacturing the display. For example, a display manufactured depending on an OLED or AMOLED technology can at most support a refresh rate of 144 Hz.

In the embodiments of this application, the maximum refresh rate may be the largest value in one or more selectable refresh rates supported by the display. For example, the display supports any refresh rate of 30 Hz, 60 Hz, 120 Hz, and 144 Hz. In this case, the electronic device may determine the first refresh rate as the maximum refresh rate of supported 144 Hz in this case. The display supports any refresh rate of 30 Hz, 60 Hz, and 120 Hz. In this case, the electronic device may determine the first refresh rate as the maximum refresh rate of 120 Hz supported by the display in this case.

During actual application, the electronic device may dynamically adjust the provided refresh rate range based on the state of the electronic device. For example, when the electronic device is in a high performance mode, the electronic device may support any refresh rate of 30 Hz, 60 Hz, 120 Hz, and 144 Hz. In this case, the electronic device may determine 144 Hz as the first refresh rate. When the electronic device is in a power saving mode, the electronic device may support any refresh rate in 30 Hz, 60 Hz, and 120 Hz. In this case, the electronic device may determine 120 Hz as the first refresh rate. When the electronic device is in a super power saving mode, the electronic device may support two refresh rates of 30 Hz and 60 Hz. In this case, the electronic device may determine 60 Hz as the first refresh rate.

It should be additionally noted that to avoid affecting user experience, the electronic device may further adopt some measures of locking the refresh rate. For example, through the locking of the refresh rate of the display, an application, a game, or the like is restricted to operate at a specific frame rate or within a specific frame rate range instead of exceeding or becoming lower than the frame rate or frame rate range, to avoid the degradation of gaming experience due to frequent variations of a refresh rate, and the like. If the electronic device locks the refresh rate at 120 Hz, in this case, only one selectable refresh rate is included. For another example, when the display is in a low brightness display state, when low brightness display has, for example, a brightness value of 30, in this case, the electronic device may alternatively lock the refresh rate of the display, at, for example, 30 Hz.

It should be noted that when an n^{th} VSync-HW signal arrives, the step of performing an n^{th} refresh of the display and determining the refresh rate for refreshing the display may be performed. Subsequently, the timing for an (n+1)^{th} VSync-HW signal to arrive is adjusted based on the first refresh rate. For example, the n^{th} VSync-HW signal arrives at the 0^{th} second. It is determined based on steps S100 and S200 that the refresh rate for refreshing the display is the first refresh rate of 120 Hz. In this case, the electronic device may adjust interval duration between two adjacent VSync-HW signals to 8.33 ms. In other words, after 8.33 ms, the (n+1)^{th} VSync-HW signal arrives. In this case, the step of performing an (n+1)^{th} refresh and determining the refresh rate for refreshing the display may be performed.

S300: When the electronic device is not in the first device state, determine whether the display includes a first target layer.

Step S300 is another condition for determining a refresh rate for displaying an image different from step S200. Based on step S300, the refresh rate for refreshing the displayed image by the display may be determined.

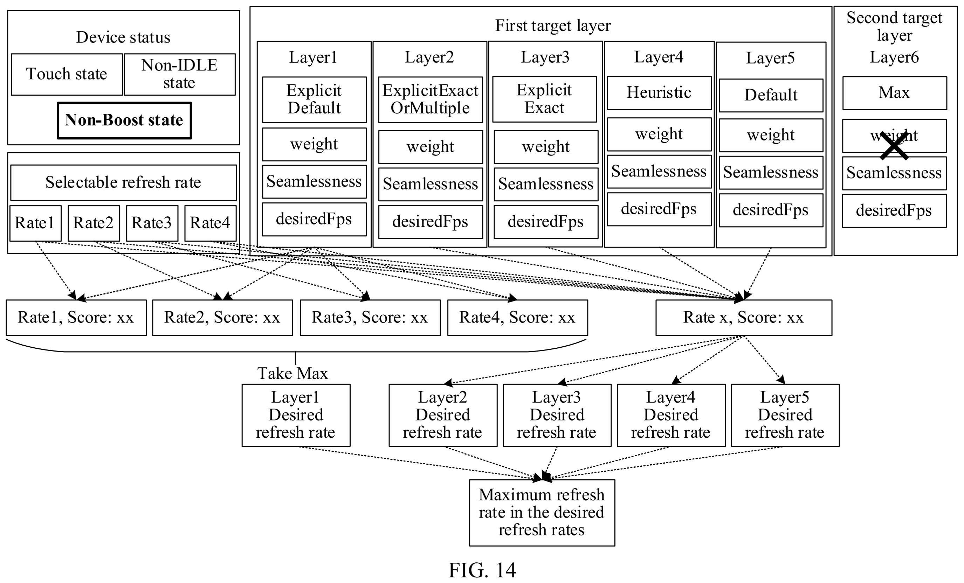

FIG. 14 is a second diagram of conditions used for determining a refresh rate for displaying an image in an image display method according to an embodiment of this application.

As shown in FIG. 14, "being not in the first device state" may also be referred to as that the electronic device is in a non-Boost state.

In the embodiments of this application, the layers are classified into three layer types: a first target layer, a second target layer, and a third target layer. The first target layer is an active layer, and a matching frame rate (desiredFps) of the first target layer is greater than or equal to a first threshold. The active layer includes a visible layer in which image content has been updated within first historical duration, and desiredFps is only an example description of the matching frame rate. The first threshold may be, for example, equal to 10 Hz, and the first historical duration may be, for example, equal to 1.2 s. The matching frame rate may be specifically preset by an application, or may be obtained by calculating the frequency of submitting images to SurfaceFlinger by the application or system. A specific calculation process is described in detail below. Details are not described herein. The matching frame rate represents the speed of updating the first target layer. For example, a game application may set a matching frame rate of a game layer to 60 Fps, that is, perform updating 60 times per second.

The second target layer is a layer in which an animation effect is being performed, and the third target layer is a wallpaper layer, and/or a layer whose matching frame rate is less than the first threshold, and a status bar layer. It should be additionally noted that FIG. 14 only exemplarily shows that the first target layer includes Layer1 to Layer5, and exemplarily shows the second target layer Layer6. The active layer may further include the third target layer, which is not shown in FIG. 14.

In an implementation, the step of determining whether a layer is an active layer may include: before the electronic device refreshes content on the display each time, for all visible layers on the display, calculating a difference value in a visible layer between a moment of a last update of image content and a current moment. If the difference value is less than or equal to the first historical duration, in this case, it may be determined that the visible layer is an active layer.

The "layer in which the image content has been updated" may be that the application has sent layer data to SurfaceFlinger within the first historical duration, or may be that a variation has occurred in an attribute of the layer within the first historical duration.

S400: Determine, when the display includes at least one first target layer, at least one desired refresh rate from at least one selectable refresh rate based on the matching frame rate of each first target layer, and refresh the content on the display at a maximum refresh rate in the at least one desired refresh rate.

For example, the selectable refresh rates may include Rate1, Rate2, Rate3, and Rate4. Rate1, Rate2, Rate3, and Rate4 may be 30 Hz, 60 Hz, 90 Hz, and 120 Hz, respectively. For each first target layer, the step of determining at least one desired refresh rate from at least one selectable refresh rate may be scoring at least one the selectable refresh rate on the display, and determining a selectable refresh rate with the highest score as the desired refresh rate of the layer. For example, for a layer x, the electronic device scores 30 Hz, 60 Hz, 90 Hz, and 120 Hz based on a matching frame rate of the layer x, and determines that 60 Hz has the highest score. In this case, a desired refresh rate of the layer x is 60 Hz. For another example, for a layer y, the electronic device scores 30 Hz, 60 Hz, 90 Hz, and 120 Hz based on a matching frame rate of the layer y, and determines that 120 Hz has the highest score. In this case, a desired refresh rate of the layer y is 120 Hz.

As can be seen, in a scoring method provided in the embodiments of this application, for any first target layer, the electronic device may score the selectable refresh rates based on the matching frame rate of the first target layer, determine the desired refresh rate of the first target layer, and subsequently select the highest desired refresh rate in the desired refresh rates of all the first target layers to perform refreshing. In this way, in the step of determining the desired refresh rate of the layer, the first target layers do not affect each other, so that the desired refresh rate can be calculated more accurately. The requirement of each layer is satisfied, so that a suboptimal experience animation effect of a layer with a large desired refresh rate can be avoided.

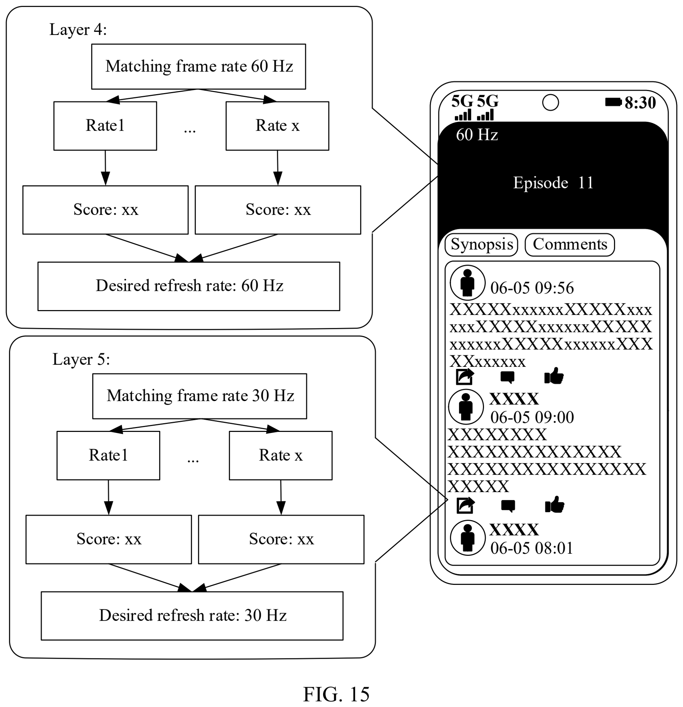

FIG. 15 is a first application diagram of an image display method according to an embodiment of this application.

As shown in FIG. 15, for example, a user is watching a video in a portrait state and browsing a comments section. In this case, the display at least includes a layer 4 in which the video is being played and a layer 5 of a comments interface. A matching frame rate of the layer 4 is 60 Fps. After scoring, a selectable refresh rate with the highest score is 60 Hz. In other words, a desired refresh rate of the layer 4 is 60 Hz. A matching frame rate of the layer 5 is 30 Fps. After scoring, a selectable refresh rate with the highest score is 30 Hz. In other words, a desired refresh rate of the layer 5 is 30 Hz. The desired refresh rate of the layer 4 is greater than the desired refresh rate of the layer 5. In this case, the electronic device eventually refreshes the content on the display at 60 Hz.

S500: Refresh the content on the display at a third refresh rate when the display does not include the first target layer, where the third refresh rate is a default refresh rate of the display.

In the embodiments of this application, the display can be directly refreshed at the default refresh rate without the scoring procedure when the first target layer does not exist, that is, when the active layer does not include a layer whose matching frame rate is greater than or equal to the first threshold.

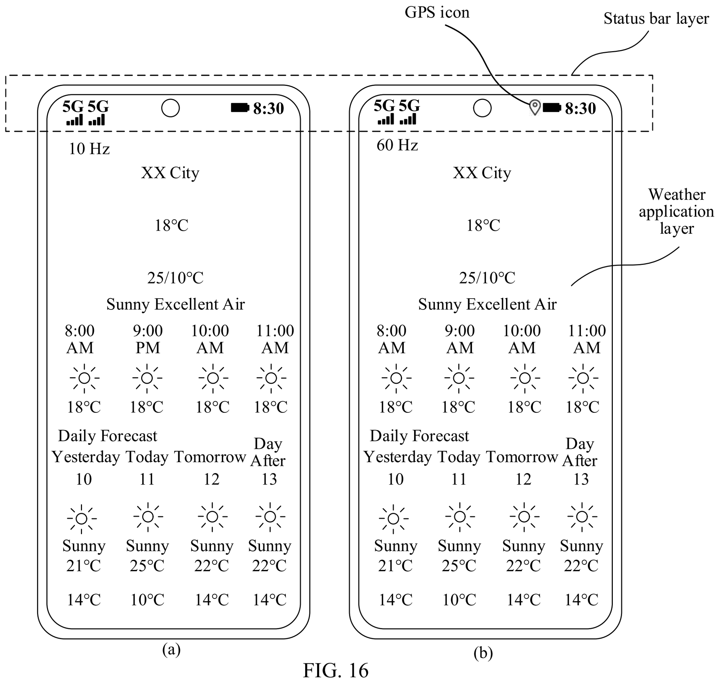

FIG. 16 is a diagram of a display including no first target layer according to an embodiment of this application.

The electronic device is not in the first device state, and the first target layer does not exist. For example, a scenario in which an instantaneous animation effect appears on the display may occur. As shown in (a) in FIG. 16, the display of the electronic device includes a status bar layer and a weather application layer, and no variation occurs in the layers. In this case, the refresh rate is 10 Hz. As shown in (b) in FIG. 16, a GPS icon appears in the status bar layer. As can be seen, no variation occurs in the weather application layer, and an instantaneous animation effect occurs in the status bar layer. In this case, the display can be refreshed at the default refresh rate, and the default refresh rate is, for example, 60 Hz.

In the embodiments of this application, the default refresh rate may be 60 Hz. It may be understood that the refresh rate of 60 Hz of the display is used as a mediate refresh rate and offers broad compatibility, and the refresh rate of 60 Hz can provide a relatively smooth and natural animation and video playing experience, so that a better visual effect can be provided, and energy consumption can be reduced while performance and smoothness are ensured.

As can be learned from the foregoing content, in the image display method provided in the embodiments of this application, whether the electronic device is in a Boost state can be used as a condition for determining a refresh rate for displaying an image, and whether the electronic device is in a Boost state is related to a target interaction event or whether a target animation effect occurs. In this way, instead of applying the maximum refresh rate when any interaction event or animation effect arrives, the maximum refresh rate can be applied when the target interaction event or the target animation effect arrives, so that a waste of resources can be avoided. When the electronic device is not in a Boost state, in the method provided in the embodiments of this application, it may be further determined whether the display includes the first target layers, and when the display includes the first target layers, the selectable refresh rates are scored based on the matching frame rate of each first target layer, and the desired refresh rates of the first target layers are determined. In this way, for any first target layer, the desired refresh rate can be determined based on the matching frame rate of the first target layer, and the first target layers do not affect each other, so that the desired refresh rate can be calculated more accurately. The content on the display is finally refreshed at the maximum refresh rate in the desired refresh rates, so that the refresh effect of the first target layer with the highest desired refresh rate is in an optimum state, and freezing or the like does not exist. When the display does not include the first target layer, the display can be refreshed at the default refresh rate.

In some implementations, before determining whether the display includes the first target layer in step S300, the method further includes S301: determining whether the display includes the second target layer.

In other words, the electronic device may first determine whether the display includes an active layer in which an animation effect is being played.

The determining whether the display includes the first target layer may include S302: determining whether the display includes the first target layer when the display does not include the second target layer.

In this way, when the display does not include the second target layer, the refresh rate for displaying the image by the display may be determined based on a scoring procedure.

In some implementations, when the first target layers exist on the display, it may be further determined that the matching frame rates of all the first target layers on the display are equal to a first preset value and none of the matching frame rates is preset, if all the first target layers in the display are equal to the first preset value and none of the matching frame rates is preset, the display is refreshed at the default refresh rate. In the embodiments of this application, when the active layer does not have a preset matching frame rate, an update count of the active layer within second historical duration is less than a count threshold, and time intervals between updates are not equal, a matching frame rate of the active layer is the first preset value.

If at least one first target layer on the display has the preset matching frame rate, at least one selectable refresh rate on the display is scored based on the matching frame rate of each first target layer, at least one desired refresh rate is determined from the at least one selectable refresh rate based on a scoring result, and the content on the display is refreshed at the maximum refresh rate in the at least one desired refresh rate.

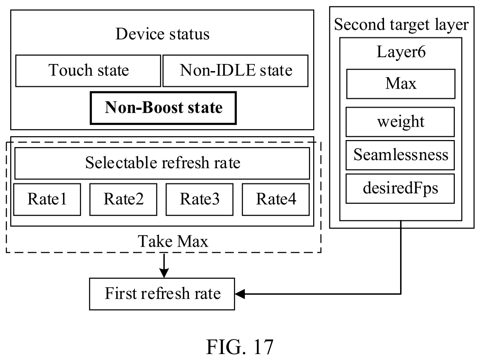

FIG. 17 is a third diagram of conditions used for determining a refresh rate for displaying an image in an image display method according to an embodiment of this application.

In some implementations, as shown in FIG. 17, in the embodiments of this application, after step S301, the method may further include S303: when the display includes the second target layer, refreshing the content on the display at the first refresh rate.

In other words, when the electronic device is not in the first device state, if the display is playing an animation effect, in this case, the display can be refreshed at the maximum refresh rate, thereby improving user experience.

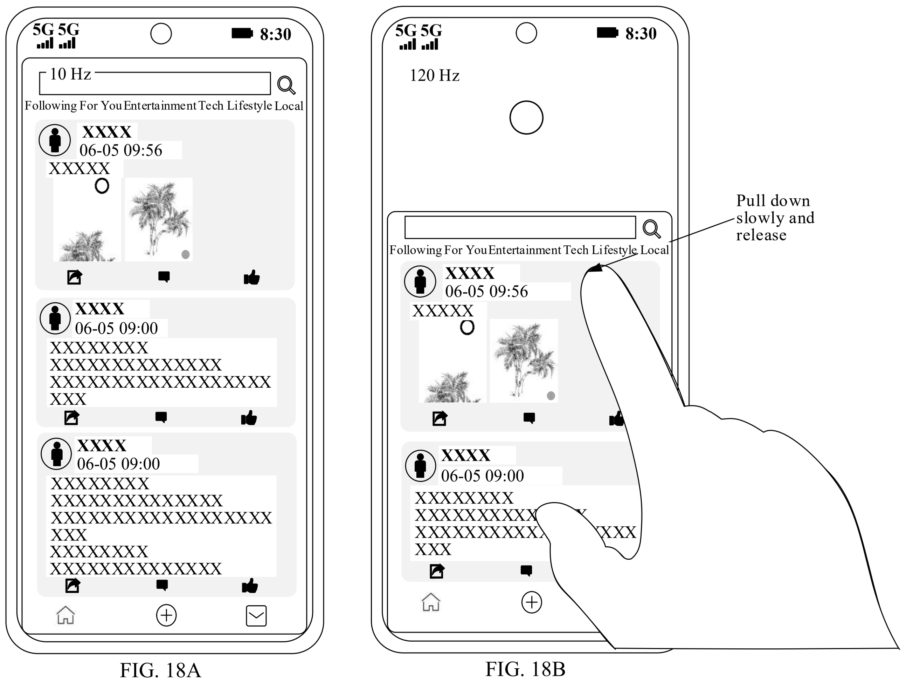

For example, as shown in FIG. 18A and FIG. 18B, the display at least includes a layer for content such as text and pictures posted by the user in an application. The user may press the display to slowly pull down and subsequently release the finger. Because a slow pull-down operation is not a click event and a first slide event, the electronic device is not triggered to enter the first device state.

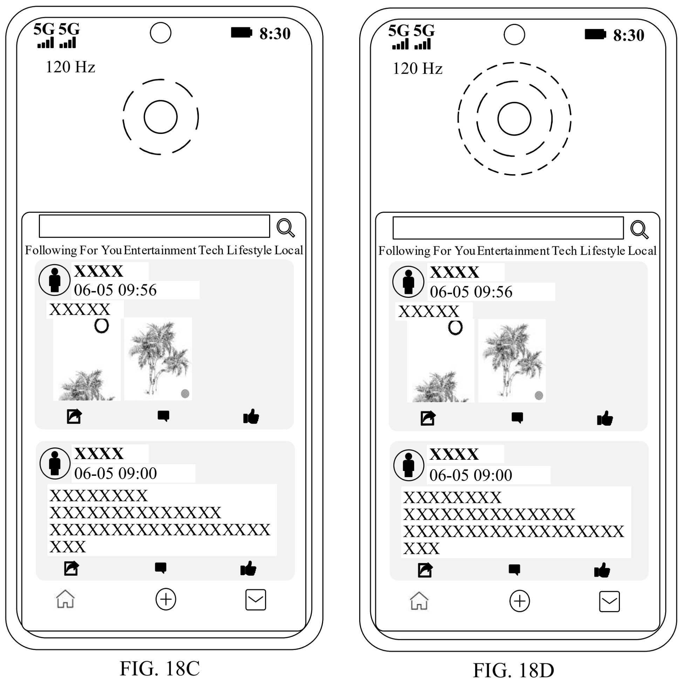

When the slow pull-down operation is performed, an updated animation effect appears on the display. In other words, an active layer in which an animation effect is being played appears on the display. In this case, the electronic device refreshes the content on the display at the first refresh rate. The first refresh rate may be 120 Hz. Next, as shown in FIG. 18C and FIG. 18D, after the user releases the finger, the updated animation effect continues to appear on the display. In other words, the active layer includes the second target layer. In this case, the electronic device continues to perform refreshing at the first refresh rate.

In this implementation, before determining whether the display includes the first target layer, the electronic device first determines whether the display includes the second target layer. If the display includes the second target layer, the content on the display is refreshed at the first refresh rate. If the display does not include the second target layer, it is further determined whether the display includes the first target layers, to perform the scoring step based on the first target layer. In this way, if the first target layers exist in the electronic device, the refresh rate for displaying the image by the display can be determined before the scoring procedure is performed, to reduce a computational amount, and increase the speed of determining a refresh rate, thereby avoiding a waste of resources.

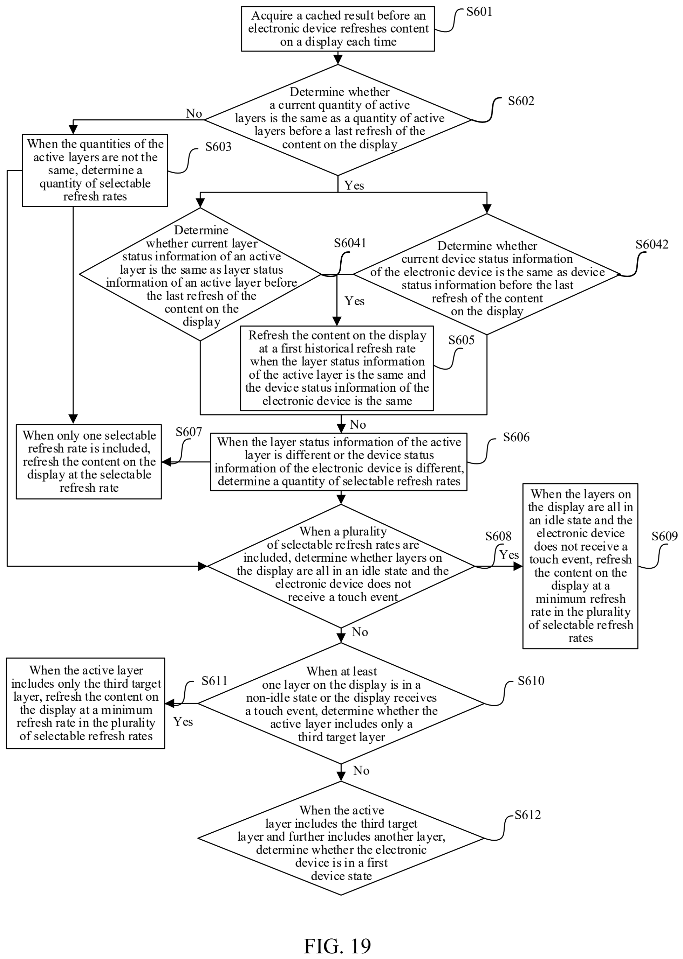

FIG. 19 is a third schematic flowchart of an image display method according to an embodiment of this application.

As shown in FIG. 19, in some embodiments, step S100 of determining, before an electronic device refreshes content on a display each time, whether the electronic device is in a first device state may be implemented through the following steps S601 to S612.

S601: Acquire a cached result before the electronic device refreshes the content on the display each time, where the cached result includes device status information of the electronic device, layer status information of the active layer, and historical refresh rate information used by the display before the last refresh of the content on the display.

A screen refresh rate is a first historical refresh rate during the last refresh of the content on the display by the electronic device.

In the embodiments of this application, the refresh rate for displaying the image by the display can be determined before during each refresh of the content on the display. After determining the refresh rate, the electronic device may cache the refresh rate as the historical refresh rate information and may further cache device status information and the layer status information of the active layer for use to determine the refresh rate for displaying the image by the display a next time.

In the embodiments of this application, in addition to the information of the first device state, the device status information may further include information of other device state, for example, information of a Touch state and information of an IDLE state.

The electronic device may enter the Touch state when receiving a touch event. The touch event may be, for example, a Touch Down event. It may be understood that the electronic device receives a touch event provided that the user touches the display. A manner in which the user touches the display may be clicking the display, or may be long pressing the display, or may be sliding the display. Therefore, after receiving the touch event and entering the Touch state, the electronic device may further receive the click event (Click) and/or the first slide event, and enter the first device state from the Touch state.

In some implementations, a screen orientation change may also trigger the electronic device to enter the Touch state.

The electronic device may enter the IDLE state when all layers on the display are in an idle state. All the layers being in an idle state may be that a variation occurs in none of the layers during n consecutive times of refreshing, where n ≥ 2.

Continuing to refer to FIG. 14, the layer status information may include, for example, a layer name (name), a matching frame rate (desiredFps), a vote type (vote type), seamlessness (Seamlessness), and a weight (weight). In some implementations, the layer status may further include a focus (focused).

The matching frame rate represents the quantity of times that a layer is updated per second, and may be specifically preset by an application, or may be calculated based on an image submission frequency of an application. For a layer with a preset matching frame rate, the matching frame rate represents a desired quantity of frames that are rendered per second in the layer of the application. For example, a game developer may expect a game to operate at a frame rate of 60 Fps to provide smooth gaming experience. The refresh rate of the display is a quantity of times that content is updated per second on the display. Therefore, to obtain an optimal visual effect and smoothness, the matching frame rate should match or be close to the refresh rate of the display. When the matching frame rate matches the refresh rate, each new image frame of an application layer is displayed during the update of the display, thereby ensuring image coherence. If the matching frame rate is lower than the refresh rate of the display, in this case, during several consecutive times of refreshing, image frames may be repeatedly displayed, and as a result pictures seem to be not smooth enough.

The first target layer, the second target layer, and the third target layer have different layer types and also different vote types. For example, a vote type of a status bar layer (StatusBar) is NoVote NoVote. The vote type further includes various other types, for example, a minimum vote right Min, a maximum vote right Max, an explicit default value ExplicitDefault, an explicit exact value or multiple value ExplicitExactOrMultiple, a heuristic type Heuristic, a default vote right Default, and an explicit exact value ExplicitExact. The vote type is further related to a scoring process, layers participating in scoring have different vote types, and calculation methods for scoring the selectable refresh rates by the electronic device based on the matching frame rates of the layers are also different.

In the embodiments of this application, the vote type of the second target layer may be Max, and the vote type of the third target layer may be Min. The vote types of the first target layer with the preset matching frame rate may include ExplicitDefault, ExplicitExactOrMultiple, and ExplicitExact.

Specifically, ExplicitDefault may be that the first target layer invokes a setFrameRate interface and sets ANATIVEWINDOW_FRAME_RATE_COMPATIBILITY_DEFAULT parameter.

ExplicitExactOrMultiple may be that the first target layer invokes the setFrameRate interface and sets an ANATIVEWINDOW_FRAME_RATE_COMPATIBILITY_FIXED_SOURCE parameter.

ExplicitExact may be that the first target layer invokes the setFrameRate interface and sets an ANATIVEWINDOW _FRAME_RATE_COMPATIBILITY_EXACT parameter.

A vote type of the first target layer whose matching frame rate is a first preset value is Default. The matching frame rate is obtained based on calculation, and a vote type of the first target layer whose matching frame rate is greater than or equal to a first threshold may be Heuristic.

Seamlessness is whether to allow refresh rate switching without experience affected. Seamlessness is generally determined by the application.

The focus may be that the layer is a layer that is making a response to a user input or operation, or is a layer displayed in the foreground. Whether the layer is specifically a focus layer may be specifically determined according to an actual case. This is not specifically limited in the embodiments of this application.

The weight is specifically a ratio of the size of a layer to the size of the display.

The layer status information may be determined by an application or an operating system to which the layer belongs. When submitting layer data or the like of the layer to SurfaceFlinger, the application may submit the foregoing layer status information to SurfaceFlinger together. In this way, before refreshing the content on the display each time, the electronic device may acquire the layer status information. Layer information that is not provided by the application may be calculated during the determination of the layer type. A specific calculation process is described in detail below. Details are not described herein.

In some embodiments, the electronic device may further save the device status information and the layer status information before the electronic device refreshes the content on the display each time and a refresh rate used by the display when the electronic device refreshes the content on the display each time. When the electronic device refreshes the content on the display each time, the refresh rate used by the display is a refresh rate determined before the display is refreshed. In this way, a cached result may be formed after the refresh rate is determined, for use to perform step S601 a next time.

Continuing to refer to FIG. 19, after step S601, the method further includes the following steps.

S602: Determine whether a current quantity of the active layers is the same as a quantity of the active layers before the last refresh.

It may be understood that a variation occurs in a quantity of active layers on the display between two refreshes of the display, for example, a new layer is added. In this case, when the refresh rate for refreshing the display is determined, it is necessary to consider a layer status of the new layer that appears. Therefore, in the embodiments of this application, during comparison of cached results, it may be first determined that whether a variation occurs in the quantity of active layers before two refreshes of the display. For example, the display includes a total of five active layers during an n^{th} refresh of the display, the display also includes five active layers before an (n-1)^{th} refresh of the display, and no variation occurs in the quantity of layers. In this case, status information of the layers may be further compared. If the display includes a total of five active layers before the n^{th} refresh of the display, and the display includes four active layers before the (n-1)^{th} refresh of the display, representing that no cached result is available, another method may be adopted to determine the refresh rate for displaying the image by the display.

S603: When the quantities of the active layers are not the same, determine a quantity of the selectable refresh rates.

If the quantities of active layers on the display before two refreshes of the display are not the same, it indicates that an active layer may be added or removed. In this case, a variation occurs in the layer status of the active layer. Therefore, the cached historical refresh rate cannot be directly used to refresh the content on the display. In this case, the quantity of selectable refresh rates on the display may be first determined. If only one selectable refresh rate exists, step S607 is performed. If a plurality of selectable refresh rates exist, step S608 is performed.

S6041: When the quantities of the active layers are the same, determine whether current layer status information of the active layer is the same as layer status information of the active layer before the last refresh of the content on the display.

S6042: Determine whether current device status information of the electronic device is the same as device status information before the last refresh of the content on the display.

For example, before a current refresh of the display, the display includes a total of six active layers: layer a, layer b, layer c, layer d, layer e, and layer f. Layer statuses of the six active layers may be saved in respective data structures LayerRequirement based on the sequential order in which the layers are created, for example:
(1) name = layer a, vote type = NoVate, desiredFps = nall, Seamlessness = true, focused = false, and weight = 0.1.

name = layer a represents that the display includes a layer with a layer name being layer a, vote type = NoVate represents that a vote type of the layer layer a is NoVate, desiredFps = nall represents that the layer layer a does not have a matching frame rate, Seamlessness = true represents that the layer layer a allows refresh rate switching with experience affected, focused = false represents that the layer layer a is not a focus layer, and weight = 0.1 represents that a weight of the layer layer a is 0.1.
(2) name = layer b, vote type = Default, desiredFps = 60 Fps, Seamlessness = true, focused = true, and weight = 0.5.

name = layer b represents that the display includes a layer with a layer name being layer b, vote type = Default represents that a vote type of the layer layer b is Default, desiredFps = 60 Fps represents that a matching frame rate of the layer layer b is 60 Fps, Seamlessness = true represents that the layer layer b allows refresh rate switching with experience affected, focused = true represents that the layer layer b is a focus layer, and weight = 0.5 represents that a weight of the layer layer b is 0.5.
(3) name = layer c, vote type = Default, desiredFps = 60 Fps, Seamlessness = true, focused = false, weight = 0.4.

name = layer c represents that the display includes a layer with a layer name being layer c, vote type = Default represents that a vote type of the layer layer c is Default, desiredFps = 60 Fps represents that a matching frame rate of the layer layer c is 60 Fps, Seamlessness = true represents that the layer layer c allows refresh rate switching with experience affected, focused = false represents that the layer layer c is not a focus layer, and weight = 0.4 represents that a weight of the layer layer c is 0.4.
(4) name = layer d, vote type = NoVate, desiredFps = nall, Seamlessness = true, focused = false, and weight = 0.1.

name = layer d represents that the display includes a layer with a layer name being layer d, vote type = NoVate represents that a vote type of the layer layer d is NoVate, desiredFps = nall represents that the layer layer d does not have a matching frame rate, Seamlessness = true represents that the layer layer d allows refresh rate switching with experience affected, focused = false represents that the layer layer d is not a focus layer, and weight = 0.1 represents that a weight of the layer layer d is 0.1.
(5) name = layer e, vote type = Max, desiredFps = 120 Fps, Seamlessness = true, focused = false, and weight = 0.7.

name = layer e represents that the display includes a layer with a layer name being layer e, vote type = Max represents that a vote type of the layer layer e is Max, desiredFps = 120 Fps represents that a matching frame rate of the layer layer e is 120 Fps, Seamlessness = true represents that the layer layer e allows refresh rate switching with experience affected, focused = false represents that the layer layer e is not a focus layer, and weight = 0.7 represents that a weight of the layer layer e is 0.7.
(6) name = layer f, vote type = Max, desiredFps = 120 Fps, Seamlessness = true, focused = false, and weight = 0.6.

name = layer f represents that the display includes a layer with a layer name being layer f, vote type = Max represents that a vote type of the layer layer f is Max, desiredFps = 120 Fps represents that a matching frame rate of the layer layer f is 120 Fps, Seamlessness = true represents that the layer layer f allows refresh rate switching with experience affected, focused = false represents that the layer layer f is not a focus layer, and weight = 0.6 represents that a weight of the layer layer c is 0.6.

Before the last refresh of the display, the display includes a total of six active layers: layer a, layer b, layer c, layer d, layer e, and layer g. Based on the sequential order in which the layers are created, layer statuses of the layers are as follows:
(1) name = layer a, vote type = NoVate, desiredFps = nall, Seamlessness = true, focused = false, and weight = 0.1.
(2) name = layer b, vote type = Default, desiredFps = 60 Fps, Seamlessness = true, focused = true, and weight = 0.5.
(3) name = layer c, vote type = Default, desiredFps = 60 Fps, Seamlessness = true, focused = false, and weight = 0.4.
(4) name = layer d, vote type = NoVate, desiredFps = nall, Seamlessness = true, focused = false, and weight = 0.1.
(5) name = layer e, vote type = Max, desiredFps = 120 Fps, Seamlessness = true, focused = false, and weight = 0.7.
(6) name = layer g, vote type = Default, desiredFps = 60 Fps, Seamlessness = true, focused = false, and weight = 0.4.

name = layer g represents that the display includes a layer with a layer name being layer g, vote type = Default represents that a vote type of the layer layer g is Default, desiredFps = 60 Fps represents that a matching frame rate of the layer layer f is 60 Fps, Seamlessness = true represents that the layer layer g allows refresh rate switching with experience affected, focused = false represents that the layer layer g is not a focus layer, and weight = 0.4 represents that a weight of the layer layer f is 0.4.

In Step S602, the active layers layer a, layer b, layer c, layer d, layer e, and layer f before the current refresh of the display may be traversed based on the sequential order in which the layers are created, and it is determined whether a variation occurs in the layer status information of the active layer compared with that before the last refresh of the display. A variation in any of name, vote type, desiredFps, Seamlessness, focused, and weight means that a variation occurs in the layer status information. For example, as can be learned from comparison, variations occur in all of a name, a vote type, a matching frame rate, and a weight of the sixth layer before the current refresh of the display.

Further, in the embodiments of this application, it may be further determined through comparison whether a variation occurs in the device status information of the electronic device. For example, before the current refresh of the display, the device status is a Touch state, and before the last refresh of the display, the device status is an IDLE state, representing that a variation occurs in the device status information before the current refresh of the display compared with that before the last refresh of the display. For another example, before the current refresh of the display, the device status is the Touch state, and before the last refresh of the display, the device status is also the Touch state, representing that no variation occurs in the device status information before the current refresh of the display compared with that before the last refresh of the display.

It should be noted that the determining whether the current layer status information of the active layer is the same as the layer status information of the active layer before the last refresh of the display and the determining whether the current device status information of the electronic device is the same as the device status information of the electronic device before the last refresh of the display may be performed simultaneously, or may be performed sequentially. This is not specifically limited in the embodiments of this application.

S605: Refresh the content on the display at the first historical refresh rate when the layer status information of the active layer is the same and the device status information of the electronic device is the same.

The quantities of the active layers are the same, the layer status information of the active layer is the same, and the device status information of the electronic device is the same, representing that a cached result available, and therefore the content on the display may be refreshed at the first historical refresh rate during the last refresh.

S606: When the layer status information of the active layer is different or the device status information of the electronic device is different, determine the quantity of the selectable refresh rates; and

If the quantities of the active layers are the same but the layer status information of the active layer is not the same or the device status information of the electronic device is not the same, it indicates that a variation occurs in a layer status of a layer on the display, or a variation occurs in the device status of the electronic device. Therefore, the content on the display cannot be refreshed by directly using the cached first historical refresh rate. In this case, the quantity of the selectable refresh rates of the display may also be determined. If only one selectable refresh rate exists, step S607 is performed. If a plurality of selectable refresh rates exist, step S608 is performed.

Step S607: When only one selectable refresh rate is included, refresh the content on the display at the selectable refresh rate.

It may be understood that the electronic device may dynamically adjust a specific value of a selectable refresh rate, for example, adjust the selectable refresh rate based on a power supply status (high performance, power saving, and super power saving), and lock the refresh rate of the display based on a requirement of an application or an animation effect of the system, or lock the refresh rate based on the brightness of the display. In a scenario of locking the refresh rate, the electronic device includes only one selectable refresh rate.

Therefore, in the embodiments of this application, it may be first determined whether only one selectable refresh rate is included. If only one selectable refresh rate is included, in this case, the content on the display may be refreshed at the selectable refresh rate, thereby reducing a computational amount.

S608: When a plurality of selectable refresh rates are included, determine whether the layers on the display are all in an idle state and the electronic device does not receive a touch event.

The layers are all in an idle state, representing that the electronic device is in an IDLE state. The display does not receive a touch event, representing that the electronic device is not in a Touch state.

S609: When the layers on the display are all in an idle state and the electronic device does not receive a touch event, refresh the content on the display at the minimum refresh rate in the plurality of selectable refresh rates.

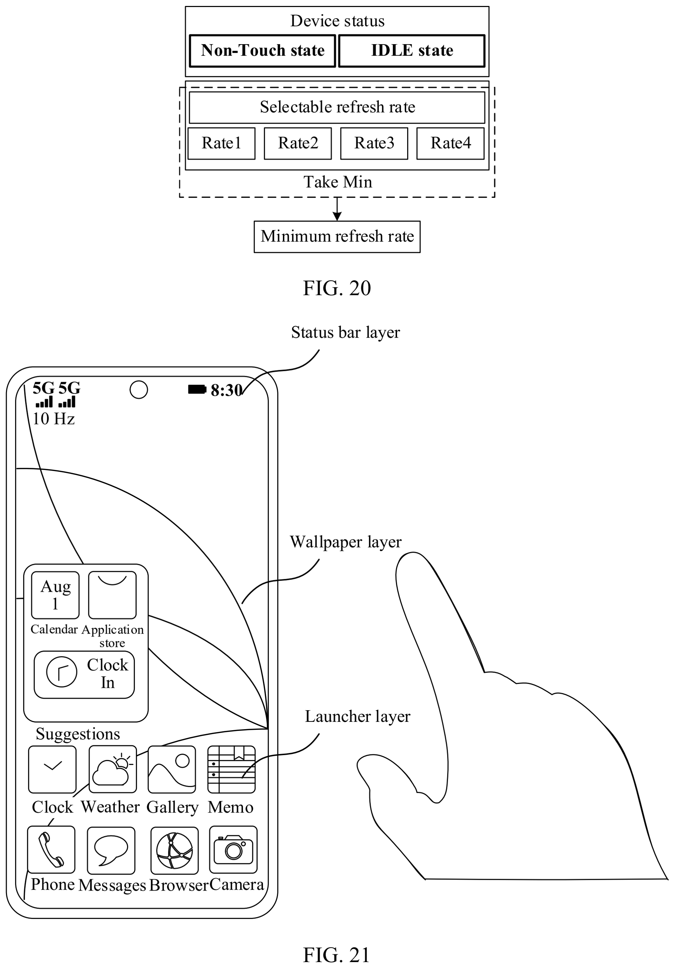

FIG. 20 is a fourth diagram of conditions used for determining a refresh rate for displaying an image in an image display method according to an embodiment of this application.

As shown in FIG. 20, when the electronic device is in an IDLE state and is not in a Touch state, the minimum refresh rate may be determined from the plurality of selectable refresh rates, and the content on the display is refreshed at the minimum refresh rate. It may be understood that when all layers on the display of the electronic device are in an idle state and no touch event occurs, no variation occurs in the content on the display, and therefore a low refresh rate of the display may be set.

For example, the minimum refresh rate in the selectable refresh rates is 10 Hz. FIG. 21 exemplarily shows that the display includes a status bar layer, a wallpaper layer, and a launcher layer. In this case, the user does not touch the display, and the status bar layer, the wallpaper layer, and the launcher layer are all in an idle state. The refresh rate at which the electronic device refreshes the display is the minimum refresh rate of 10 Hz.

S610: When at least one layer on the display is in a non-idle state or the display receives a touch event, determine whether the active layer includes only a third target layer.

The third target layer includes a wallpaper layer, a layer whose matching frame rate is less than the first threshold, and a status bar layer.

At least one layer is in a non-idle state, representing that the electronic device is not in an IDLE state. The display receives a touch event, representing that the electronic device is in a Touch state. The electronic device is in a Touch state or is not in an IDLE state, representing that a next refresh process may involve a variation in the layers, and therefore the refresh rate may be determined based on an actual case of the layers.

That at least one layer on the display is in a non-idle state or the display receives a touch event specifically includes three actual cases: Case 1: The electronic device is in a Touch state and is in an IDLE state. Case 2: The electronic device is in a Touch state and is not in an IDLE state. Case 3: The electronic device is not in a Touch state and is not in an IDLE state.

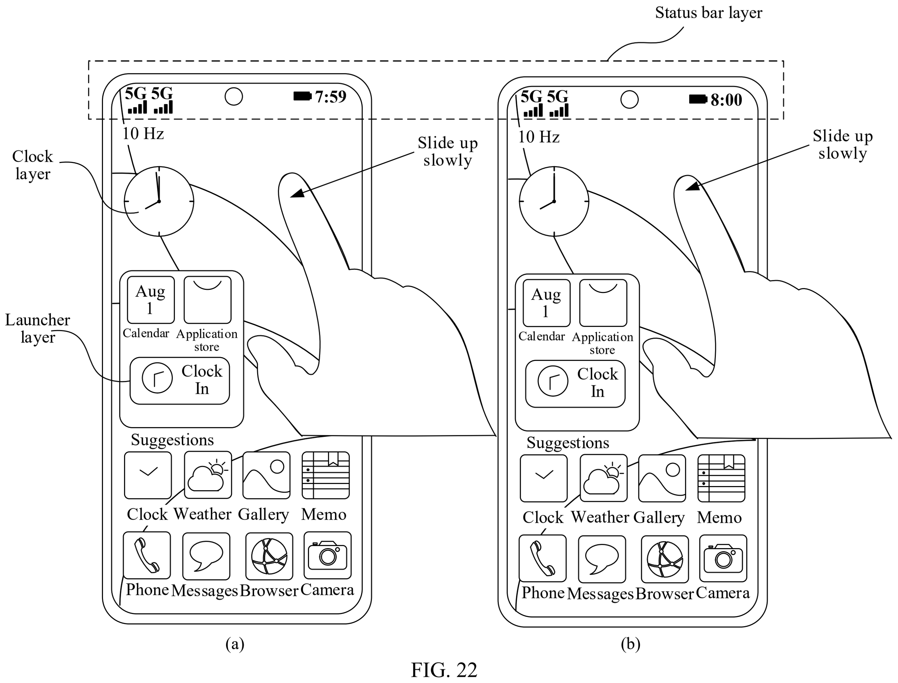

Further, (a) and (b) in FIG. 22 exemplarily show a case in which a layer is in a non-idle state and the display receives a touch event. When a finger of the user slowly slides upward on an unresponsive area of the display, the electronic device receives a Touch Down event and enters the Touch state. The unresponsive area means that the electronic device does not make any response to a Touch Down event received in the area. In this case, variations occur in the status bar layer and a clock layer, and the electronic device enters a non-idle state.

For example, the minimum refresh rate in the selectable refresh rates is 10 Hz. Continuing to refer to (b) in FIG. 22, when a Touch Down event occurs and the status bar layer and the clock layer are in a non-idle state, the active layer includes the status bar layer and the clock layer, and the launcher layer is not is an active layer. It may be understood that the status bar layer is the third target layer, a matching frame rate of the clock layer is 1 Hz, that is, is updated once per second, the matching frame rate is less than the first threshold of 10 Hz, and the clock layer is also the third target layer. As can be learned, the active layer in (b) of FIG. 22 includes only the third target layer. In this case, the electronic device may refresh the content on the display at the minimum refresh rate of 10 Hz in the selectable refresh rates.

S611: When the active layer includes only the third target layer, refresh the content on the display at the minimum refresh rate in the plurality of selectable refresh rates.

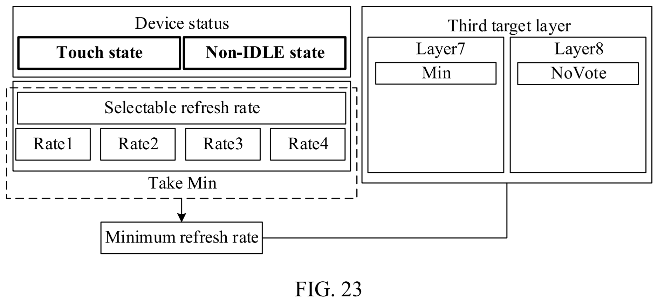

FIG. 23 is a fifth diagram of conditions used for determining a refresh rate for displaying an image in an image display method according to an embodiment of this application.

As shown in FIG. 23, if all the active layers include only the third target layer, it indicates that layers on the display involve relatively small variations. In this case, a low refresh rate of the display may be used, and therefore the content on the display may be refreshed at the minimum refresh rate in the plurality of selectable refresh rates. FIG. 23 shows that the third target layers may include the wallpaper layer and a layer with the matching frame rate being less than the first threshold, represented by layer7. The third target layers may further include a status bar layer, represented by layer8.

S612: When the active layer includes the third target layer and further includes another layer, determine whether the electronic device is in the first device state.

It may be understood that if all the active layers include another layer different from the third target layers, it may represent that an active layer with a large variation exists in the display. Therefore, it may be further determined whether the electronic device is in the first device state, and the refresh rate for displaying the image by the display is determined based on the device state.

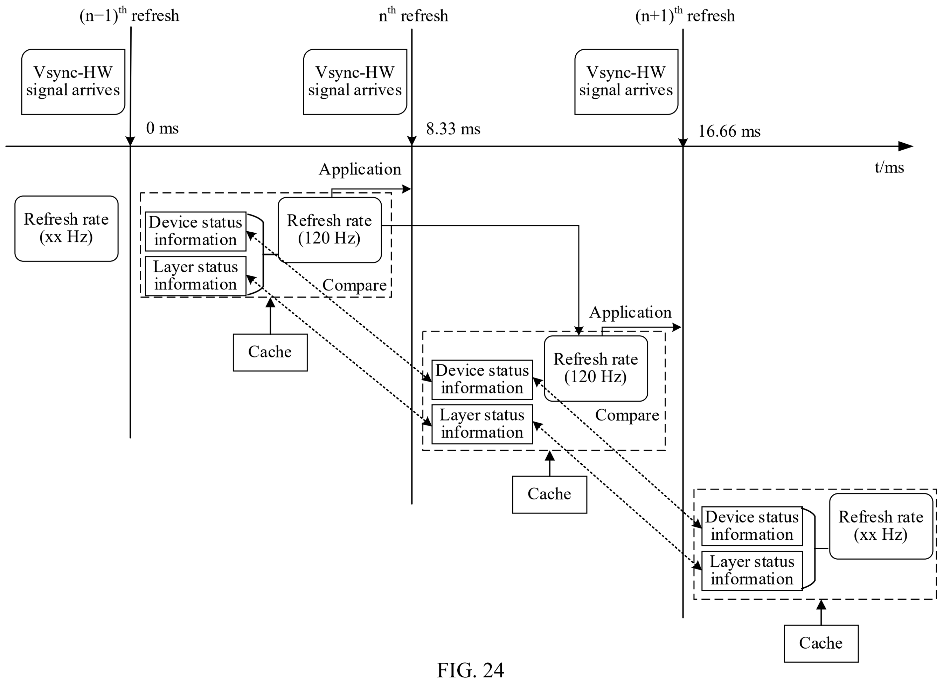

FIG. 24 is a schematic flowchart of comparison with a cached result according to an embodiment of this application.

As shown in FIG. 24, at the 0^{th} ms, the electronic device performs an (n-1)^{th} refresh. A refresh rate of the (n-1)^{th} refresh is not limited herein. After the (n-1)^{th} refresh ends, the electronic device may perform the step of determining the refresh rate for displaying the image by the display. A comparison process of cached results is not shown herein. Instead, a refresh rate of an n^{th} refresh of the display is directly determined through steps S606 to S612, and final 120 Hz is a schematic value. It should be noted that the device status information and the layer status information applied to steps S606 to S612 are determined based on the status after the (n-1)^{th} refresh ends. Subsequently, the electronic device may cache the device status information, the layer status information, and the refresh rate of 120 Hz. Because the refresh rate of the display determined before the n^{th} refresh is 120 Hz, the n^{th} refresh may be performed after 8.33 ms.

Further, after the n^{th} refresh ends, the electronic device may perform steps S601 to S612 again to determine the refresh rate for displaying the image by the display. In the current process of determining the refresh rate, the electronic device first acquires a cached result before the n^{th} refresh to obtain the device status information, the layer status information, and the first historical refresh rate of 120 Hz before the n^{th} refresh. It is assumed that no variations occur in the device status information and the layer status information after the n^{th} refresh ends (before the (n+1)^{th} refresh) compared with the device status information and the layer status information in the cached result. Therefore, refreshing may continue to be performed at 120 Hz. In other words, the (n+1)^{th} refresh is performed after 16.66 ms.

Further, after the (n+1)^{th} refresh ends, the electronic device may perform steps S601 to S612 again to determine the refresh rate for displaying the image by the display to determine a refresh rate of an (n+2)^{th} refresh of the display.

The step of determining a layer type is described below with reference to the accompanying drawings.

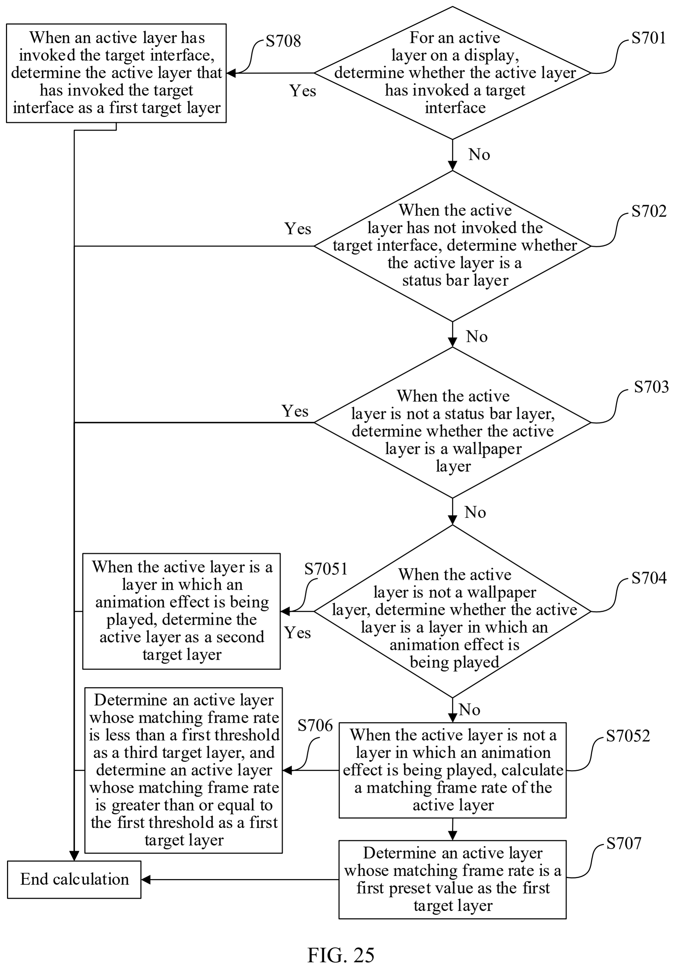

FIG. 25 is a flowchart of determining a layer type according to an embodiment of this application.

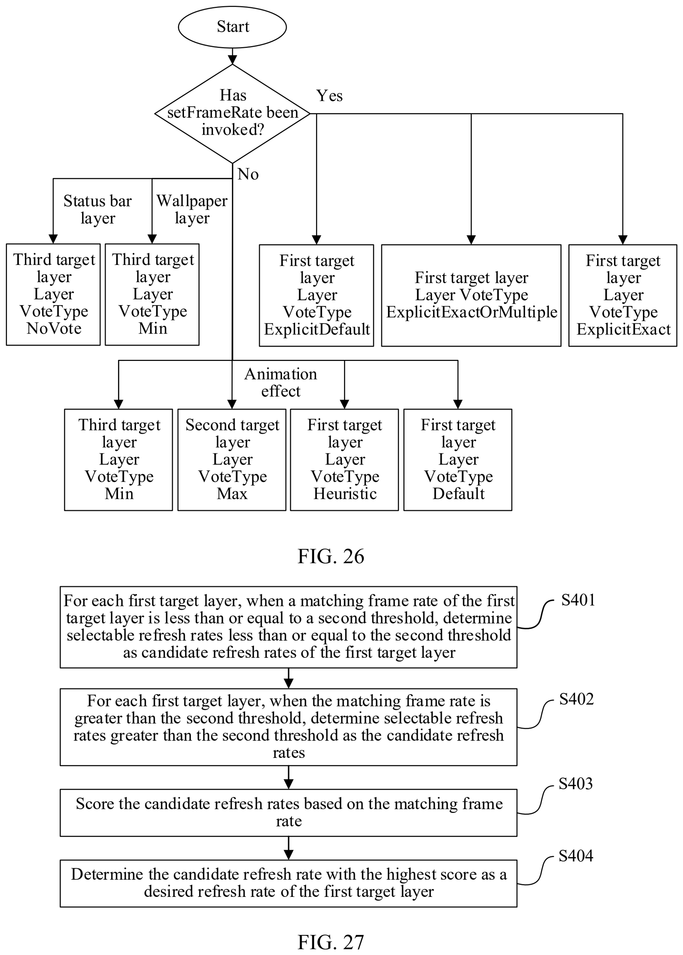

FIG. 26 is an example diagram of the procedure in FIG. 25.

As shown in FIG. 25 and FIG. 26, before refreshing the display each time, the electronic device may perform the following steps S701 to S707 to determine layer types of active layers on the display. During actual application, after the n^{th} refresh of the display and before the (n+1)^{th} refresh of the display, the layer types of the active layers on the display are determined, and steps S601 to S612 are performed based on the layer types. An active layer for which a layer type is determined may be a layer obtained by deduplicating an active layer for which a layer type is determined after the (n-1)^{th} refresh of the display.

S701: For an active layer on the display, determine whether the active layer has invoked a target interface.

The target interface may be a setFrameRate interface used for setting a matching frame rate. If the active layer has invoked the target interface, it represents that the active layer includes matching frame rate information, and the matching frame rate information is preset by an application. If the active layer has not invoked the target interface, it represents that the active layer does not include matching frame rate information. The matching frame rate information specifically indicates a matching frame rate of the active layer.

Whether the active layer has invoked a target interface is determined by an application to which the active layer belongs.

S702: When the active layer has not invoked the target interface, determine whether the active layer is a status bar layer.

S703: When the active layer is not a status bar layer, determine whether the active layer is a wallpaper layer, and when the active layer is a wallpaper layer, end calculation.

S704: When the active layer is not a wallpaper layer, determine whether the active layer is a layer in which an animation effect is being played, where the criteria for determining whether an animation effect is being played in the active layer may be that variations such as element zooming, rotation, and fade-in fade-out exist in two or more consecutive frames of the layer. If elements involve the foregoing variations in two or more consecutive frames in the layer, an animation effect is being played in the layer.

S7051: When the active layer is a layer in which an animation effect is being played, determine that the active layer is a second target layer.

S7052: When the active layer is not a layer in which an animation effect is being played, calculate the matching frame rate of the active layer.

S706: Determine that an active layer whose matching frame rate is less than a first threshold is a third target layer, and determine that an active layer whose matching frame rate is greater than or equal to the first threshold is a first target layer.

Specifically, the step of calculating the matching frame rate of the active layer in step S7052 specifically includes S7052a: determining the matching frame rate based on an update count of the active layer within second historical duration and a time interval between updates when the active layer does not include the matching frame rate information.

The second historical duration may be 1 s, 2 s, 5 s or 10 s. The update count may be a quantity of times that the application submits graphic objects of layers to SurfaceFlinger. The time interval between updates may be a time interval between submissions. For example, for a second hand layer of a clock application, the clock application submits a new graphic object of the second hand layer to SurfaceFlinger once every second. Therefore, within 5 s, an update count of the second hand layer is 5, and a time interval between updates is 1 s.

Further, step S7052a includes the following steps S7052a-1 and S7052a-2.

S7052a-1: The matching frame rate is a ratio of the update count to the second historical duration when the update count is greater than or equal to a count threshold or the time intervals between all updates are equal.

The matching frame rate calculated based on a small update count has low accuracy. In addition, if time intervals between updates have large differences, it represents that image submission to the layer by the application is irregular. In this case, the calculated matching frame rate also cannot represent an actual update state of the layer and a requirement for a refresh rate. Therefore, in the embodiments of this application, a matching frame rate may be calculated for an active layer whose update count is greater than or equal to the count threshold or with time intervals between updates are equal. The count threshold is, for example, equal to 3, and the second historical duration may be, for example, equal to 3 s or 5 s. This is not specifically limited in the embodiments of this application.

For example, when the second historical duration is 5 s, for the second hand layer of the clock application, a ratio of an update count of the second hand layer to the second historical duration = 5/5 = 1 time/second. In this case, a matching frame rate of the second hand layer of the clock application is 1 fps.

S7052a-2: When the update count is less than the count threshold and the time intervals between all updates are not equal, the matching frame rate is a first preset value.

The first preset value is, for example, 60 Fps. In this way, for a layer whose update count is less than the count threshold and with time intervals between updates being not equal and a matching frame rate that cannot be calculated, it may be determined that a matching frame rate of the second hand layer is 60 Fps, to keep the matching frame rate from being set as the maximum refresh rate in the selectable refresh rates, thereby avoiding a waste of resources because the electronic device refreshes the display at the maximum refresh rate.

It may be understood that some layer status information such as vote type information and matching frame rate information that is not provided to SurfaceFlinger by the application may be determined during the calculation of the layer type.

S707: Determine an active layer whose matching frame rate is the first preset value as the first target layer.

In some implementations, after step S701, the method further includes:

S708: When an active layer has invoked the target interface, determine the active layer that has invoked the target interface as the first target layer.

It may be understood that when the active layer has invoked the target interface, it represents that the active layer has a preset matching frame rate.

FIG. 27 is a flowchart of scoring selectable refresh rates according to an embodiment of this application.

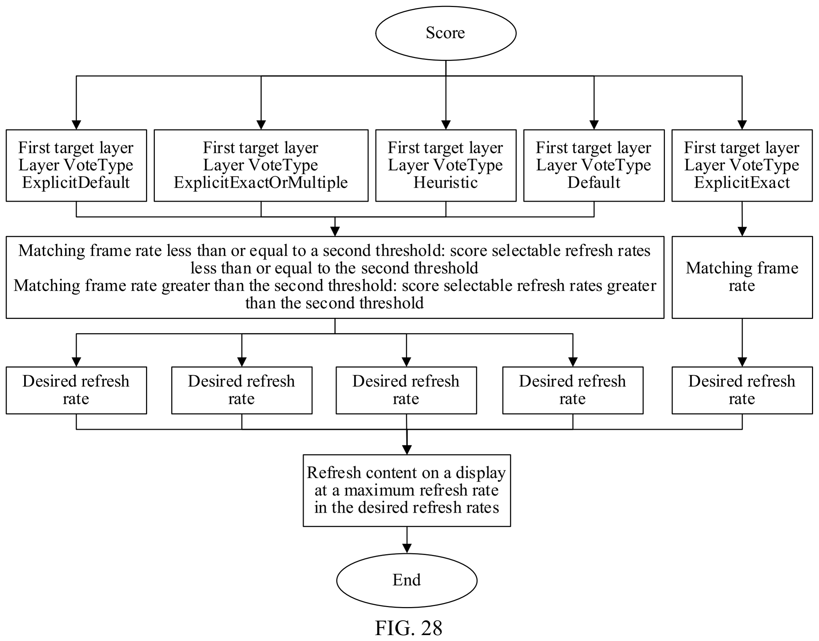

FIG. 28 is an example diagram of the procedure in FIG. 27.

Step S400, that is, the step of determining, when the display includes at least one first target layer, at least one desired refresh rate from at least one selectable refresh rate is described in detail below with reference to the accompanying drawings.

In step S400, for a first target layer whose vote type is ExplicitExact, a desired refresh rate of the first target layer may be made equal to a matching frame rate.

For first target layers whose vote types are Heuristic, ExplicitDefault, ExplicitExactOrMultiple, and Default, step S400 may specifically include the following steps:

S401: For each first target layer, when a matching frame rate of the first target layer is less than or equal to a second threshold, determine a selectable refresh rate less than or equal to the second threshold as a candidate refresh rate of the first target layer.

The second threshold is greater than the first threshold. For example, the second threshold may be 60 Fps. The selectable refresh rates may include, for example, 30 Hz, 60 Hz, 90 Hz, 120 Hz, and 144 Hz. A matching frame rate of a first target layer may be 60 Fps. In this case, candidate refresh rates of the first target layer are 30 Hz and 60 Hz. In this way, a desired refresh rate may be determined by scoring only 30 Hz and 60 Hz, and 90 Hz, 120 Hz, and 144 Hz do not need to be scored, so that a computational amount can be reduced.

S402: For each first target layer, when the matching frame rate is greater than the second threshold, determine selectable refresh rates greater than the second threshold as the candidate refresh rates.

For example, a matching frame rate of a first target layer is, for example, equal to 90 Fps. In this case, 90 Hz, 120 Hz, and 144 Hz may be scored for the first target layer, and 30 Hz and 60 Hz do not need to be scored.

In some implementations, the electronic device may score all the selectable refresh rates based on the matching frame rate of the first target layer to obtain the desired refresh rate of the first target layer. This is not specifically limited in the embodiments of this application.

S403: Score the candidate refresh rates based on the matching frame rate.

S404: Determine the candidate refresh rate with the highest score as the desired refresh rate of the first target layer.

In this way, the desired refresh rate close to the matching frame rate of the layer can be selected, and a computational amount can be reduced, thereby improving the speed of determining a refresh rate.

Step S403, that is, the step of scoring the candidate refresh rates based on the matching frame rate is further described below.

In some implementations, step S403 may specifically include the following step S4031 and step S4032:

S4031: When the candidate refresh rate is equal to the matching frame rate, determine the candidate refresh rate as a first score value.

The candidate refresh rate displayRate = the matching frame rate desiredFps. In this case, it may be determined that the candidate refresh rate is the first score value, and the first score value is, for example, 1.

For example, desiredFps = 30 Fps, displayRate includes 30 Hz and 60 Hz, 30 Hz = 30 Fps, and a score value of 30 Hz is the first score value, that is, a score of 1.

It should be additionally noted that in the embodiments of this application, the first target layer may have one or more desired refresh rate. A specific quantity may be determined by a calculation result.

S4032: When the candidate refresh rate is not equal to the matching frame rate, determine the candidate refresh rate as a second score value, where the second score value is less than the first score value.

For example, 60 Hz ≠ 30 Fps, a score value of 60 Hz is the second score value, and the second score value may be obtained based on calculation. A specific calculation process is described in detail below.

In this way, the desired refresh rate may be the candidate refresh rate having the first score value, the desired refresh rate and the matching frame rate do not have a difference, and the matching frame rate of the layer is satisfied, so that the display effect of the layer can be smooth, thereby improving user experience.

In some other implementations, step S403 may further specifically include the following step S4033 and step S4034:

S4033: When the candidate refresh rate is an integer multiple of the matching frame rate, determine the candidate refresh rate as the first score value.

displayRate = (N * desiredFps). In this case, it is determined that the score value of the selectable refresh rate is the first score value, and the first score value is, for example, 1.

For example, desiredFps = 30 Fps, and displayRate includes 30 Hz and 60 Hz, 30 Hz = (1 * 30 Fps), and a score value of 30 Hz is the first score value, that is, a score of 1. 60 Hz = (2 * 30 Fps), and a score value of 60 Hz is also the first score value, that is, a score of 1.

S4034: When the candidate refresh rate is not an integer multiple of the matching frame rate, determine the candidate refresh rate as the second score value.

That the candidate refresh rate is not an integer multiple of the matching frame rate at least includes the following two cases: the candidate refresh rate is greater than the matching frame rate (displayRate > desiredFps) and the candidate refresh rate is less than the matching frame rate (displayRate<desiredFps). In the two cases, the second score values of the candidate refresh rates are all less than the first score value. When the first score value is 1, the score values of the candidate refresh rates are less than 1. A specific scoring process is shown in the following table:

**Table 1 Formulas for scoring selectable refresh rates**

| | | |
|---|---|---|
| ExplicitDefault | displayRate = (N * desiredFps) | score = 1 |
| | displayRate < desiredFps | score = displayRate/desiredFps |
| | displayRate > desiredFps | score = displayRate/(multiplier * desiredFps) |
| Default Heuristic ExplicitExactOrMultiple | displayRate = (N * desiredFps) | score = 1 |
| | isFractionPairOrMultiple | score = 0.8 |
| | displayRate < desiredFps | score = displayRate/(desiredFps * (10+1)) |
| | displayRate > desiredFps | score = **1/iter** + 2 |

Specifically, for a first target layer whose vote type is ExplicitDefault, when a candidate refresh rate is less than a matching frame rate, a second score value may be calculated by using the formula score = displayRate/desiredFps. When the candidate refresh rate is greater than the matching frame rate, the second score value may be calculated by using the formula score = displayRate/(multiplier * desiredFps). multiplier is a multiple, and may be, for example, equal to the least common multiple of displayRate and desiredFps, and a specific count value of multiplier may be determined according to an actual case. It should be noted that the second score value is calculated based on the formula score = displayRate/(multiplier * desiredFps) is less than 1.

For first target layers whose vote types are Default, Heuristic, and ExplicitExactOrMultiple, when a candidate refresh rate is an approximate integer multiple (isFractionPairOrMultiple) of a matching frame rate, a score value of the candidate refresh rate may be 0.8. In other words, the second score value is equal to 0.8. When the candidate refresh rate is less than the matching frame rate, the second score value may be calculated by using the formula score = displayRate/(desiredFps * (10+1)). When the candidate refresh rate is greater than the matching frame rate, the second score value may be calculated by using the formula score = 1/iter + 2. iter represents an iterative count, and a specific value of iter may be determined according to an actual case. This is not specifically limited in the embodiments of this application. It should be noted that the second score value obtained through calculation based on the formula score = 1/iter + 2 is a value between 0.1 and 0.5.

As can be learned, in the embodiments of this application, when each candidate refresh rate is scored based on the matching frame rate, the step of calculating a weight weight is not involved. In other words, the size of the layer does not affect the calculation of the desired refresh rate. In this way, a desired refresh rate close to a matching frame rate can be obtained for both a layer with a small weight and a layer with a large weight, so that a large layer with a low refresh rate can be kept from affecting the selection for a desired refresh rate by a small layer with a high refresh rate, so that a large layer with a low refresh rate can be kept from affecting animation effect experience of a small layer with a high refresh rate.

It should be noted that because the matching frame rate of the first target layer whose vote type is Default is the first preset value rather than the largest value supported by the display or the maximum refresh rate in the selectable refresh rates, so that the refresh rate for displaying the image by the display when the display includes the layer can be kept from being excessively large, thereby avoiding a waste of resources.

A device status of the electronic device is described below with reference to the accompanying drawings.

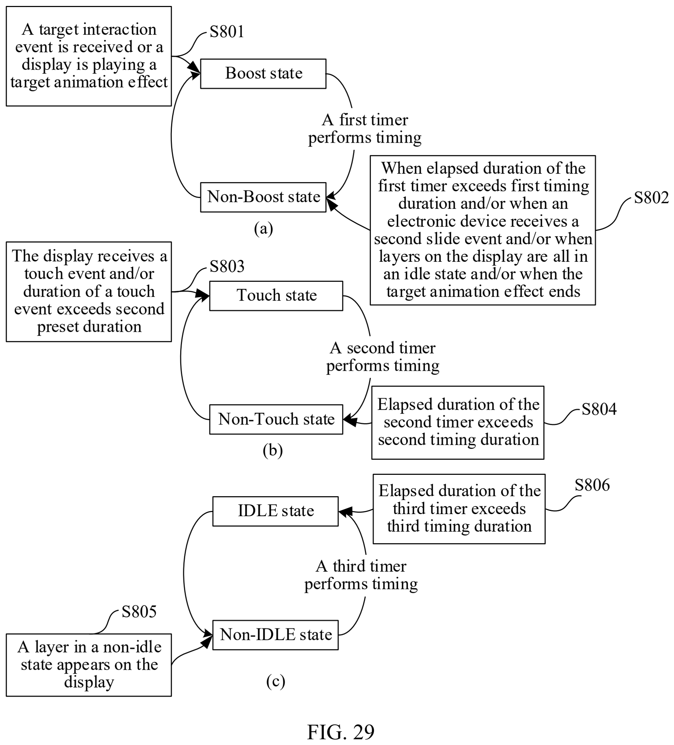

FIG. 29 is a diagram of switching a device state of an electronic device according to an embodiment of this application.

As shown in (a) of FIG. 29, a first timer is disposed for the first device state in embodiments of this application. Specifically, the electronic device may switch between the first device state (Boost state) and a non-first device state (Non-Boost state).

S801: When the electronic device receives the target interaction event or the display is in a state of playing the target animation effect, enter the first device state and start a first timer, where first timing duration is set in the first timer.

The target interaction event is, for example, a click event or a first slide event. The target animation effect is, for example, a splash animation effect of an application. For details, refer to the foregoing content. Details are not described herein.

In some implementations, when the click Click event occurs, the electronic device may start the first timer. In some other implementations, when a slide speed corresponding to a Touch Move event is greater than a threshold, it is determined that the first slide event occurs. The electronic device may start the first timer. When the target animation effect occurs on the display or when a graphic object or the like of a layer received by SurfaceFlinger corresponds to the target animation effect, it may be determined that the target animation effect occurs, and the electronic device may start the first timer.

It should be noted that the first timer starting timing corresponds to that the electronic device enters the first device state, the first timer being performing timing corresponds to that the electronic device is in the first device state, and elapsed duration of the first timer exceeding the first timing duration corresponds to that the electronic device exits the first device state.

In some implementations, the first timing duration may be, for example, equal to 200 ms. This is not specifically limited in the embodiments of this application.

S802: When elapsed duration of the first timer exceeds the first timing duration and/or when the electronic device receives a second slide event and/or when the layers on the display are all in an idle state and/or when the target animation effect ends, the electronic device exits the first device state, where the second slide event may be a slide event whose slide speed is less than or equal to the first preset threshold.

It may be understood that every time when the target interaction event occurs or the target animation effect occurs, the electronic device may start the first timer, and therefore the elapsed duration of the first timer exceeds the first timing duration, representing that no new target interaction event occurs or no target animation effect appears within the first timing duration. In this case, the electronic device may exit the first device state, thereby saving resources.

The electronic device receiving the second slide event may be specifically that after a user presses a finger to perform a quick slide operation to trigger the first device state, the user reduces the speed of the slide operation, and a quick slide operation variation turns into a slow slide operation. The quick slide operation and the slow slide operation are a single press-and-hold operation of the user. It may be understood that a key factor for the first slide event to trigger the first device state is a fast speed of the slide operation. Therefore, when the slide speed decreases, the first slide event is switched into the second slide event. A layer variation involved in the second slide event is generally less than a layer variation involved in the first slide event. Therefore, in the embodiments of this application, the second slide event interrupts the first device state.

In some implementations, the first device state is also interrupted when the electronic device enters an IDLE state. Specifically, after the first timer starts timing again for the last time, none of click events that occur triggers a variation in layer content. For example, the click operations are performed by the user in an unresponsive area of the display. The unresponsive area is, for example, a static wallpaper. In this case, none of the click events triggers a variation in the layer. In this case, the electronic device may enter the IDLE state. After the electronic device enters the IDLE state, the first device state is interrupted.

In some implementations, that the target animation effect ends means that the layer may no longer change frequently, and therefore the first device state of the electronic device is also interrupted.

As can be learned, in the embodiments of this application, whether the electronic device is in the first device state may be determined based on the timing duration of the first timer. If the elapsed duration of the first timer does not exceed the first timing duration, in this case, the electronic device is in the first device state. If the elapsed duration of the first timer exceeds the first timing duration, in this case, the electronic device is not in the first device state, that is, is in the non-first device state.

In the embodiments of this application, an external interface may be provided, and the target interaction event, the target animation effect, and the like may be defined in the interface to be invoked by an application. When the application invokes the interface, if the user operates the target interaction event in the layer of the application or the target animation effect appears in the layer of the application, the first device state may be triggered. The interface may alternatively define an access permission to forbid invocation by, for example, an input method application. This is not specifically limited in the embodiments of this application.

As shown in (b) of FIG. 29, in the embodiments of this application, the electronic device may switch between the Touch state and the Non-Touch state.

S803: When the display receives a touch event and/or duration of a touch event exceeds second preset duration, the electronic device enters the Touch state and starts a second timer, where the second timing duration is set in the second timer.

The second timing duration should be greater than the second preset duration. The second preset duration may be, for example, equal to 50 ms or 100 ms. This is not specifically limited in the embodiments of this application. The touch event is, for example, a Touch Down event or a Touch Move event. For the specific explanation of the Touch Down event and the Touch Move event, refer to the foregoing content. Details are not described herein.

During actual application, the Touch Down event occurs, and the electronic device may start the second timer. If the Touch Move event occurs before elapsed duration of the second timer exceeds the second timing duration and the Touch Move event lasts for specific duration, in this case, the electronic device may restart the second timer. In other words, the second timer starts timing again. For example, as the Touch Move event occurs, the electronic device is notified once every 100 ms, to enable the electronic device to restart the second timer. Therefore, every time when the Touch Down event occurs, the electronic device may restart the second timer, and every time when the Touch Move event lasts for 100 ms, the electronic device may restart the second timer.

In some implementations, the second timing duration may be equal to 200 ms, 500 ms, or 1000 ms. This is not specifically limited in the embodiments of this application.

S804: When elapsed duration of the second timer exceeds the second timing duration, the electronic device exits the Touch state.

The elapsed duration of the second timer exceeds the second timing duration, indicating that no touch event occurs or a touch event stops lasting within the second preset duration, in this case, the electronic device may exit the Touch state.

In the embodiments of this application, an external interface may be provided, and the touch event and the like may be defined in the interface to be invoked by an application. When the application invokes the interface, if the user operates the touch event in the layer of the application, the Touch state may be triggered.

As shown in (c) of FIG. 29, in the embodiments of this application, the electronic device may switch between the IDLE state and the Non-IDLE state.

S805: When a layer in the non-idle state occurs on the display, the electronic device exits the IDLE state and starts a third timer, where third timing duration is set in the third timer.

If content, an attribute, or the like of a layer changes, it may be determined that the layer is in a non-idle state. The attribute of the layer is, for example, transparency, a position, a size, a style, a transition effect, or the like of the layer. This is not specifically limited in the embodiments of this application. When a layer in the non-idle state appears on the display, the third timer is reset and starts timing, and the electronic device enters the Non-IDLE state.

In some implementations, the third timing duration may be equal to 200 ms. This is not specifically limited in the embodiments of this application.

S806: When elapsed duration of the third timer exceeds the third timing duration, the electronic device enters the IDLE state.

Every time when a layer in the non-idle state appears on the display, the electronic device may start the third timer. Therefore, the elapsed duration of the third timer exceeds the third timing duration, indicating that no new layer in the non-idle state appears within the third timing duration, and therefore the electronic device may exit the Non-IDLE state and enter the IDLE state.

It should be additionally noted that after the first timer is reset for the last time and performs timing, none of click events that occur triggers a variation in layer content, and the electronic device is not necessarily enabled to enter the IDLE state. The reason is that if none of the click events triggers a variation in layer content and the third timer is in a state of performing timing with the elapsed duration of the third timer not exceeding the third timing duration, in this case, the electronic device is still in the Non-IDLE state. After the elapsed duration of the third timer exceeds the third timing duration, the electronic device may enter the IDLE state, and the first device state is interrupted only in this case.

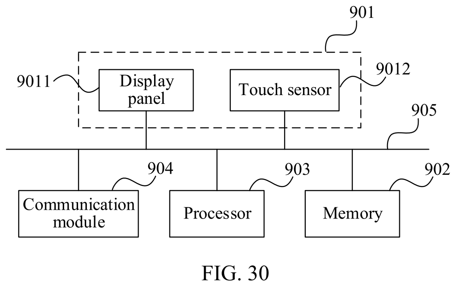

FIG. 30 is a diagram of a structure of an image display apparatus according to an embodiment of this application.

As shown in FIG. 30, in an embodiment, the electronic device may implement a corresponding function through a hardware apparatus shown in FIG. 30. The apparatus may include a touch screen 901, a memory 902, a processor 903, and a communication module 904. The foregoing devices may be connected by using one or more communication buses 905. The foregoing devices may be connected by using one or more communication buses 905. The touch screen 901 may include a display panel 9011 and a touch sensor 9012. The display panel 9011 is configured to display an image. The touch sensor 9012 may transfer the detected touch operation to the application processor 903, to determine a type of a touch event, and provide a visual output related to the touch operation by using the display panel 9011. The processor 903 may include one or more processing units. For example, the processor 903 may include an application processor, a modem, a graphics processor, an image signal processor, a controller, a video codec, a digital signal processor, a baseband processor, and/or a neural network processor. Different processing units may be separate devices, or may be integrated into one or more processors. The memory 902 is coupled to the processor 903, and is configured to store various software programs and/or computer instructions. The memory 902 may include a volatile memory and/or a nonvolatile memory. When the processor executes the computer instructions, the electronic device may perform functions or steps in the foregoing method embodiments.

When executed by the processor 903, the software program and/or a plurality of groups of instructions in the memory 902 cause the electronic device to implement the following method steps: when the electronic device is in a first device state, determining a first refresh rate, where the first refresh rate is a maximum refresh rate of a display of the electronic device, and a trigger condition for enabling the electronic device to enter the first device state includes: the electronic device receives a first interaction event, or a target animation effect appears on the display; and refreshing content displayed on the display of the electronic device using the first refresh rate.

This application further provides an electronic device, including a processor, a memory, and a touch screen. The memory stores program instructions. When the program instructions are executed by the processor, the electronic device is enabled to perform the image display method according to any one of the implementations of the foregoing embodiments.

An embodiment of this application further provides a chip system. The chip system includes at least one processor and at least one interface circuit. The processor is connected to the interface circuit through a line. For example, the interface circuit may be configured to receive a signal from another apparatus (for example, a memory of an electronic device). For another example, the interface circuit may be configured to send a signal to another apparatus. For example, the interface circuit may read instructions stored in the memory and send the instructions to the processor. When the instructions are executed by the processor, the electronic device is enabled to perform the steps in the foregoing embodiments. It is clear that the chip system may further include another discrete device. This is not specifically limited in this embodiment of this application.

An embodiment of this application further provides a computer-readable storage medium. The computer-readable storage medium includes computer instructions. When the computer instructions are run on the foregoing electronic device, the electronic device is enabled to perform the functions or steps performed in the foregoing method embodiments.

An embodiment of this application further provides a computer program product. When the computer program product runs on a computer, the computer is enabled to perform the functions or steps performed in the foregoing method embodiments.

According to the descriptions of the foregoing implementations, a person skilled in the art may clearly understand that, for the purpose of convenient and brief description, the division into the foregoing functional modules is only used as an example for description. In actual application, the foregoing functions may be allocated to and completed by different functional modules based on needs. That is, an inner structure of an apparatus is divided into different functional modules to complete all or some of the functions described above.

In the several embodiments provided in this application, it should be understood that the disclosed apparatus and method may be implemented in another manner. For example, the described apparatus embodiment is merely an example. For example, division of modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separated, and parts displayed as units may or may not be one or a plurality of physical units, that is, may be located at one position, or may be distributed to a plurality of different places. Some or all of the units may be selected based on actual needs, so as to achieve the objective of the solution of the embodiments.

In addition, functional units in the embodiments of this application may be integrated into one processing unit, each of the units may exist alone physically, or two or more units are integrated into one unit. The integrated unit may be implemented in a form of hardware, or may be implemented in the form of a software function unit.

When the integrated unit is implemented in the form of the software functional unit and sold or used as an independent product, the integrated unit may be stored in a readable storage medium. Based on such an understanding, the technical solutions in embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. The storage medium includes: a USB flash disk, a mobile hard disk, a read only memory (ROM), a random access memory (RAM), a magnetic disk, an optical disk, and other media capable of storing program codes.

What is described above is merely specific implementations of this application, but the protection scope of this application is not limited to such implementations. Any variation or replacement within the technical scope disclosed in this application still fall within the protection scope of this application. Therefore, the protection scope of this application shall be subject to the protection scope of the claims.

## Claims

1. An image display method, wherein the method is applied to an electronic device and comprises:
displaying an image on a display of the electronic device at a first refresh rate when the electronic device is in a first device state, wherein the electronic device being in the first device state comprises: the electronic device receives a target interaction event, the target interaction event comprises a click event and a first slide event, and the first slide event is a slide event whose slide speed is greater than a first preset threshold; and the first refresh rate is a maximum refresh rate of the display, or the first refresh rate is greater than or equal to a preset refresh rate threshold.

2. The image display method according to claim 1, wherein the electronic device being in the first device state further comprises: the display is playing a target animation effect, wherein the target animation effect is a variation range of an animation effect image exceeding a first variation value.

3. The image display method according to claim 2, wherein the target animation effect being the variation range of the animation effect image exceeding the first variation value comprises: the target animation effect is a variation range of the animation effect image within first preset duration exceeding the first variation value.

4. The image display method according to any one of claims 1 to 3, further comprising:
displaying, by the display, the image using a matching refresh rate of an image layer when the electronic device is not in the first device state.

5. The image display method according to claim 4, wherein the displaying, by the display, the image using a matching refresh rate of an image layer when the electronic device is not in the first device state comprises:
displaying, by the display, the image at a second refresh rate when the electronic device is not in the first device state and the display comprises M first target layers, wherein the first target layers are active layers, matching frame rates of the first target layers are greater than or equal to a first threshold, the active layers comprise visible layers in which image content has been updated within first historical duration, and the second refresh rate is determined based on the matching frame rates of the M first target layers; and
displaying, by the display, the image at a third refresh rate when the electronic device is not in the first device state and the display does not comprise the first target layers, wherein the third refresh rate is a default refresh rate of the display.

6. The image display method according to claim 5, wherein the second refresh rate is the largest refresh rate in a refresh rate 1 to a refresh rate M, wherein the refresh rate 1 is a desired refresh rate of the first first target layer, and the refresh rate M is a desired refresh rate of an M^{th} first target layer; and
the refresh rate 1 is determined based on a matching frame rate of the first first target layer and selectable refresh rates supported the display, and the refresh rate M is determined based on a matching frame rate of the M^{th} first target layer and the selectable refresh rates supported by the display.

7. The image display method according to claim 5, wherein the default refresh rate is 60 Hz.

8. An image display method, comprising:
determining whether an electronic device is in a first device state before the electronic device refreshes content on a display each time, wherein the first device state comprises: the electronic device receives a target interaction event or the display is playing a target animation effect, the target interaction event comprises a click event and/or a first slide event, and the first slide event is a slide event whose slide speed is greater than a first preset threshold;
refreshing the content on the display at a first refresh rate when the electronic device is in the first device state, wherein the first refresh rate is a maximum refresh rate of the display, or the first refresh rate is greater than or equal to a preset refresh rate threshold;
determining whether the display comprises a first target layer when the electronic device is not in the first device state, wherein the first target layer is an active layer, a matching frame rate of the first target layer is greater than or equal to a first threshold, and the active layer comprises a visible layer in which image content has been updated within first historical duration;
determining, when the display comprises at least one first target layer, at least one desired refresh rate from at least one selectable refresh rate based on the matching frame rate of each first target layer, and refreshing the content on the display at a maximum refresh rate in the at least one desired refresh rate; and
refreshing the content on the display at a third refresh rate when the display does not comprise the first target layer, wherein the third refresh rate is a default refresh rate of the display.

9. The image display method according to claim 8, wherein before the determining whether the display comprises a first target layer, the method further comprises:
determining whether the display comprises a second target layer, wherein the second target layer is an active layer in which an animation effect is being played; and
the determining whether the display comprises a first target layer comprises:
determining whether the display comprises the first target layer when the display does not comprise the second target layer.

10. The image display method according to claim 8, wherein the determining at least one desired refresh rate from at least one selectable refresh rate based on the matching frame rate of each first target layer comprises:
for each first target layer, when the matching frame rate is less than or equal to a second threshold, determining the selectable refresh rate less than or equal to the second threshold as a candidate refresh rate, wherein the second threshold is greater than the first threshold;
for each first target layer, when the matching frame rate is greater than the second threshold, determining the selectable refresh rate greater than the second threshold as the candidate refresh rate;
scoring each candidate refresh rate based on the matching frame rate; and
determining the candidate refresh rate with the highest score as the desired refresh rate of the first target layer.

11. The image display method according to claim 10, wherein the scoring each candidate refresh rate based on the matching frame rate comprises:
when the candidate refresh rate is equal to the matching frame rate, determining the candidate refresh rate as a first score value; and
when the candidate refresh rate is not equal to the matching frame rate, determining the candidate refresh rate as a second score value, wherein the second score value is less than the first score value;
or,
when the candidate refresh rate is an integer multiple of the matching frame rate, determining the candidate refresh rate as the first score value; and
when the candidate refresh rate is not an integer multiple of the matching frame rate, determining the candidate refresh rate as the second score value.

12. The image display method according to claim 8, further comprising:
acquiring a cached result before the electronic device refreshes the content on the display each time, wherein the cached result comprises device status information of the electronic device, layer status information of the active layer, and historical refresh rate information used by the display before the last refresh of the content on the display, and a screen refresh rate is a first historical refresh rate during the last refresh of the content on the display by the electronic device;
determining whether a current quantity of the active layers is the same as a quantity of the active layers before the last refresh of the content on the display;
when the quantities of the active layers are not the same, determining a quantity of the selectable refresh rates;
when the quantities of the active layers are the same, determining whether current layer status information of the active layer is the same as layer status information of the active layer before the last refresh of the content on the display, and determining whether current device status information of the electronic device is the same as device status information of the electronic device before the last refresh of the content on the display; and
refreshing the content on the display at the first historical refresh rate when the layer status information of the active layer is the same and the device status information of the electronic device is the same.

13. The image display method according to claim 12, further comprising:
when the layer status information of the active layer is different or the device status information of the electronic device is different, determining the quantity of the selectable refresh rates; and
when only one selectable refresh rate is comprised, refreshing the content on the display at the selectable refresh rate.

14. The image display method according to claim 13, further comprising:
when a plurality of selectable refresh rates are comprised, determining whether the layers on the display are all in an idle state and the electronic device does not receive a touch event;
when the layers on the display are all in an idle state and the electronic device does not receive a touch event, refreshing the content on the display at the minimum refresh rate in the plurality of selectable refresh rates;
when at least one layer on the display is in a non-idle state or the display receives a touch event, determining whether the active layer comprises only a third target layer, wherein the third target layer comprises a wallpaper layer, a layer whose matching frame rate is less than the first threshold, and a status bar layer; and
when the active layer comprises only the third target layer, refreshing the content on the display at the minimum refresh rate in the plurality of selectable refresh rates.

15. The image display method according to claim 14, wherein the determining whether an electronic device is in a first device state comprises: when the active layer comprises the third target layer and further comprises another layer, determining whether the electronic device is in the first device state.

16. The image display method according to claim 15, further comprising:
when the electronic device receives the target interaction event or the display is in a state of playing the target animation effect, entering the first device state and starting a first timer, wherein first timing duration is set in the first timer; and
when elapsed duration of the first timer exceeds the first timing duration and/or when the electronic device receives a second slide event and/or when the layers on the display are all in an idle state and/or when the target animation effect ends, exiting, by the electronic device, the first device state, wherein the second slide event is a slide event whose slide speed is less than or equal to the first preset threshold.

17. The image display method according to claim 12, wherein before the acquiring a cached result, the method further comprises:
before the electronic device refreshes the content on the display each time, for each active layer, determining whether the active layer comprises matching frame rate information, wherein the matching frame rate information indicates the matching frame rate; and
determining the matching frame rate based on an update count of the active layer within second historical duration and a time interval between updates when the active layer does not comprise the matching frame rate information.

18. The image display method according to claim 17, wherein the determining the matching frame rate based on an update count of the active layer within second historical duration and a time interval between updates comprises:
the matching frame rate is a ratio of the update count to the second historical duration when the update count is greater than or equal to a count threshold or the time intervals between all updates are equal; and
when the update count is less than the count threshold and the time intervals between all updates are not equal, the matching frame rate is a first preset value.

19. The image display method according to claim 12, further comprising:
saving the device status information and the layer status information before the electronic device refreshes the content on the display each time and a refresh rate used by the display when the electronic device refreshes the content on the display each time.

20. An electronic device, comprising: a processor and a memory, wherein the memory stores program instructions, and the program instructions cause the electronic device to perform the image display method according to any one of claims 1 to 19 when executed by the processor.

21. A computer-readable storage medium, wherein the computer-readable storage medium stores instructions, and when the instructions are executed on an electronic device, the electronic device is enabled to perform the image display method according to any one of claims 1 to 19.

22. A computer program product, wherein when the computer program product is executed on an electronic device, the electronic device is enabled to perform the image display method according to any one of claims 1 to 19.
